# EUROPÄISCHE PATENTSCHRIFT

(11) **EP 2 160 355 B1**
(45) Veröffentlichungstag und Bekanntmachung des Hinweises auf die Patenterteilung: **31.08.2011**
(21) Anmeldenummer: 08735788.5
(22) Anmeldetag: 03.04.2008
(51) Int. Cl.: C01B 39/46

(54) **VERFAHREN ZUR HERSTELLUNG EINES HETEROATOM ENTHALTENDEN SILIKATES**
METHOD FOR PRODUCING A SILICATE CONTAINING A HETEROATOM
PROCÉDÉ DE PRÉPARATION D'UN SILICATE CONTENANT DES HÉTÉROATOMES

(30) Priorität: 04.04.2007 EP 07105621
(43) Veröffentlichungstag der Anmeldung: 10.03.2010
(73) Patentinhaber: BASF SE, 67056 Ludwigshafen (DE); Rubitec Gesellschaft Für Innovation Und Technologie Der Ruhr-Universität Bochum MBH, 44801 Bochum (DE)
(72) Erfinder: MÜLLER, Ulrich, 67435 Neustadt (DE); TRUKHAN, Natalia, 67063 Ludwigshafen (DE); GIES, Hermann, 45549 Sprockhövel (DE); VARSZEGI, Csaba, B-3600 Genk (BE); DE VOS, Dirk, B-3220 Holsbeek (BE); TIJSEBAERT, Bart, B-8200 Sint-Andries (BE)
(86) Internationale Anmeldenummer: PCT/EP2008/054046
(87) Internationale Veröffentlichungsnummer: WO 2008/122579

(56) Entgegenhaltungen:
- Y. X. WANG, H. GIES, B. MARLER: "Synthesis and Crystal Structure of Zeolite RUB-41 Obtained as Calcination Product of a Layered Precursor: a Systematic Approach to a New Synthesis Route" CHEMISTRY OF MATERIALS, Bd. 17, Nr. 1, 15. Dezember 2004 (2004-12-15), Seiten 43-49, XP002520803 DOI: 10.1021/cm048677z
- Y. X. WANG, H. GIES, AND J. H. LIN: "Crystal Structure of the New Layer Silicate RUB-39 and Its Topotactic Condensation to a Microporous Zeolite with Framework Type RRO" CHEMISTRY OF MATERIALS, Bd. 19, Nr. 17, 21. Juli 2007 (2007-07-21), Seiten 4181-4188, XP002520804 DOI: 10.1021/cm0706907
- B.MARLER, N. STRÖTER AND H. GIES: "The structure of the new pure silica zeolite RUB-24, Si32O64, obtained by topotactic condensation of the intercalated layer silicate RUB-18star, open" MICROPOROUS AND MESOPOROUS MATERIALS, Bd. 83, Nr. 1-3, 13. Juni 2005 (2005-06-13), Seiten 201-211, XP002520805 doi:10.1016/j.micromeso.2005.04.007
- Y. S. BHAT, S. ALI, J. DAS, B. D. BHATT AND A. B. HALGERICORRESPONDING AUTHOR CONTACT INFORMATION: "MFI metallosilicates catalyzed ortho- and para-toluidine conversion" JOURNAL OF MOLECULAR CATALYSIS A: CHEMICAL, Bd. 111, Nr. 3, 25. September 1996 (1996-09-25), Seiten 307-311, XP002520806 doi:10.1016/1381-1169(96)00178-1
- SHUPING YUAN, JIANGUO WANG, YONGWANG LI AND SHAOYI PENG: "Siting of B, Al, Ga or Zn and bridging hydroxyl groups in mordenite: an ab initio study" JOURNAL OF MOLECULAR CATALYSIS A: CHEMICAL, Bd. 175, Nr. 1-2, 2001, Seiten 131-138, XP002520807 doi:10.1016/S1381-1169(01)00208-4

## Beschreibung

Die vorliegende Erfindung betrifft ein Verfahren zur Herstellung von Silikaten, die die Zeolithstruktur RUB-39 oder RRO (RUB-41) aufweisen und mindestens Ga und/oder Zn als Heteroatom im Silikatgitter enthalten. Das erfindungsgemäße Verfahren zeichnet sich weiter durch die bevorzugte Verwendung eines Silikates der Struktur Si-RUB-39 als Kristallisationshilfsmittel bei der hydrothermalen Synthese des Heteroatom enthaltenden Silikates aus. Weiter betrifft die vorliegende Erfindung die Silikate, die durch das erfindungsgemäße Verfahren herstellbar sind, die Silikate an sich und Verwendungen dieser Silikate.

In chemischen Produktions- oder Reinigungsverfahren stellt sich häufig die Aufgabe der Abtrennung mindestens eines Stoffes aus einem Stoffgemisch oder ganz allgemein der Auftrennung von Stoffgemischen. Grundsätzlich kann diese Auftrennung durch destillative Verfahren gelöst werden. Allerdings sind - insbesondere im Fall sehr eng siedender Gemische - diese destillativen Verfahren nicht oder nur unter Einsatz von Hilfsstoffen wirtschaftlich sinnvoll durchführbar. Ein Beispiel für die Auftrennung von eng siedenden Gemischen ist die Trennung von Alkanen oder Alkenen, wie beispielsweise die Auftrennung isomerer Alkane oder Alkene. Weiter stellt sich in chemischen Produktionsverfahren, gleich ob im Labor-, Technikums- oder großindustriellem Maßstab, häufig die Aufgabe, für bestimmte Reaktionen geeignete Katalysatoren zur Verfügung zu stellen.

WO 2005/100242 A1 offenbart mikroporöse Gerüstsilikate und Verfahren zu deren Herstellung. Dabei werden die Edukte, aus denen die Vorstufe des Gerüstsilikates kristallisiert wird, ohne jegliche Zugabe eines Kristallisationshilfsmittels gemischt und anschließend hydrothermal behandelt. Daraus resultieren Kristallisationszeiten, die in bestimmten Anwendungsbereichen als zu lange angesehen werden können.

Das in der WO 2005/100242 A1 beschriebene Gerüstsilikat ist auch in Y. X. Wang et al., Chem. Mater. 17, 2005, S.43-49 beschrieben, wobei auch das im Kontext dieses wissenschaftlichen Artikels beschriebene Syntheseverfahren ohne den Einsatz eines Kristallisationshilfsmittels durchgeführt wird und Kristallisationszeiten von 15 bis 45 Tagen beschrieben werden.

Eine der der vorliegenden Erfindung zugrunde liegenden Aufgaben war es daher, neue Verbindungen bereitzustellen, die als Molekularsiebe, Adsorptionsmittel und/oder als Katalysatoren eingesetzt werden können.

Eine weitere, der vorliegenden Erfindung zugrunde liegende Aufgabe war es, ein Verfahren zur Herstellung dieser Verbindungen bereitzustellen.

Eine weitere, der vorliegenden Erfindung zugrunde liegende Aufgabe war es, neue Silikate, insbesondere Zeolithe bereitzustellen, die zum einen für die oben beschriebenen Anwendungszwecke, ebenso aber auch für jeden weiteren denkbaren Zweck oder in anderen technischen Gebieten vorteilhaft eingesetzt werden können.

Demgemäß betrifft die vorliegende Erfindung ein Verfahren zur Herstellung eines Silikats, enthaltend mindestens Silicium, Sauerstoff und mindestens ein aus der Gruppe bestehend aus Ga und Zn ausgewähltes Heteroatom, umfassend
(1) Herstellen einer kolloidalen wässrigen Lösung aus mindestens einer Siliciumdioxidquelle, mindestens einer R₁R₂R₃R₄N⁺ umfassenden Tetraalkylammoniumverbindung, wobei R₁ und R₂ gleich Methyl und sowohl R₃ als auch R₄ gleich n-Propyl sind, mindestens einer Base, mindestens einem Kristallisationshilfsmittel und mindestens einer Heteroatomquelle, ausgewählt aus der Gruppe bestehend aus einer Ga-Quelle und einer Zn-Quelle;
(2) hydrothermale Kristallisation durch Erwärmen der unter (1) erhaltenen kolloidalen wässrigen Lösung auf eine Temperatur im Bereich von größer der unter dem gewählten Druck vorliegenden Siedetemperatur der kolloidalen wässrigen Lösung bis 180 °C bei Normaldruck unter Erhalt einer Suspension, enthaltend mindestens ein Silikat, enthaltend Silicium, Sauerstoff und mindestens das aus der Gruppe bestehend aus Ga und Zn ausgewählte Heteroatom,
wobei als Kristallisationshilfsmittel in (1) ein Silikat mit der Struktur des gemäß (2) erhaltenen Silikates eingesetzt wird.

Die Temperatur bei der Herstellung der kolloidalen wässrigen Lösung gemäß (1) liegt bevorzugt im Bereich von 10 bis 40 °C, weiter bevorzugt im Bereich von 15 bis 35 °C und insbesondere bevorzugt im Bereich von 20 bis 30 °C, wobei weiter Raumtemperatur besonders bevorzugt ist.

### Tetraalkylammoniumverbindung / Base

Neben der mindestens einen R₁R₂R₃R₄N⁺ umfassenden Tetraalkylammoniumverbindung kann erfindungsgemäß eine von dieser Verbindung verschiedene Base eingesetzt werden. Hierbei sind etwa Ammoniumhydroxid NH₄OH, Alkalihydroxide oder Erdalkalihydroxide wie etwa Natriumhydroxid oder Kaliumhydroxid oder Mischungen aus zwei oder mehr dieser Verbindungen zu nennen. In diesem Fall enthält die mindestens eine R₁R₂R₃R₄N⁺ umfassende Tetraalkylammoniumverbindung ein oder mehrere geeignete Anionen wie beispielsweise Halogenanionen wie beispielsweise Fluorid oder Chlorid oder Bromid oder Iodid.

Gemäß einer bevorzugten Ausführungsform enthält die mindestens eine R₁R₂R₃R₄N⁺ umfassende Tetraalkylammoniumverbindung auch die gemäß (1) eingesetzte Base als Anion. Als basische Anionen sind diesbezüglich unter anderem das Hydroxidion oder Aluminate zu nennen. Als basisches Anion ist das Hydroxidion besonders bevorzugt.

Demgemäß betrifft die vorliegende Erfindung auch ein wie oben beschriebenes Verfahren, das dadurch gekennzeichnet ist, dass die mindestens eine R₁R₂R₃R₄N⁺ umfassende Tetraalkylammoniumverbindung ein basisches Anion, bevorzugt ein Hydroxidion, enthält.

Ebenso betrifft die vorliegende Erfindung daher auch ein wie oben beschriebenes Verfahren, das dadurch gekennzeichnet ist, dass die gemäß (1) eingesetzte wässrige Lösung Dimethyldi-n-propylammoniumhydroxid (DMDPAH) enthält.

DMDPAH kann nach jedem denkbaren Verfahren hergestellt werden. Eine Möglichkeit zur Herstellung ist beispielsweise eine elektrochemische Dialyse mittels einer Membran. Gemäß einer Ausführungsform des erfindungsgemäßen Verfahrens wird DMDPAH durch Umsetzung von Dipropylamin und Methyliodid und anschließenden Anionenaustausch erhalten. Gemäß einer weiteren Ausführungsform werden Dipropylamin und Methyliodid in einem geeigneten Lösungsmittel oder Lösungsmittelgemisch, bevorzugt in Ethanol, miteinander umgesetzt. Die Temperatur, bei der diese Umsetzung erfolgt, liegt bevorzugt im Bereich von 20 bis 75 °C, weiter bevorzugt im Bereich von 30 bis 60 °C und insbesondere bevorzugt im Bereich von 40 bis 50 °C. Gemäß einer weiteren Ausführungsform des erfindungsgemäßen Verfahrens kann DMDPAH ausgehend von Dimethylamin und Propylbromid in einem geeigneten Lösungsmittel, beispielsweise bevorzugt Ethanol, bei einer geeigneten Temperatur, beispielsweise bevorzugt von 40 bis 50 °C, hergestellt werden. Der erfindungsgemäße Anionenaustausch erfolgt bevorzugt nach Abtrennung wie beispielsweise etwa durch Filtrieren, Zentrifugieren oder ein anderes Fest-Flüssig-Trennverfahren, beispielsweise bevorzugt durch Filtration, und Waschen des jeweiligen Ammoniumhydroxides, beispielsweise bevorzugt mit einem geeigneten Alkohol wie beispielsweise Ethanol, durch ein geeignetes lonenaustauscherharz wie beispielsweise ein Amberlyst™-Harz oder ein Harz vom Typ AG1-X8 (BioRad). Möglich ist auch Ionenaustausch unter Verwendung von Ag₂O. Ebenso kann im erfindungsgemäßen Verfahren kommerziell erhältliches DMDPAH verwendet werden wie beispielsweise eine wässrige DMDPAH-Lösung der Firma Sachem. DMDPAH wird in (i) bevorzugt als Lösung, insbesondere bevorzugt als wässrige Lösung eingesetzt, wobei die Konzentration der wässrigen Lösung bezüglich DMDPAH beispielsweise im Bereich von 10 bis 20 Gew.-%, bevorzugt im Bereich von 15 bis 20 Gew.% liegt.

### Siliciumdioxid : Tetraalkylammoniumverbindung: Wasser

Die molaren Verhältnisse von Siliciumdioxid und/oder von dem aus der Precursorverbindung durch hydrothermale Synthese gemäß (2) im dann erhaltenen Silikat resultierenden Siliciumdioxid, Tetraalkylammonium-Verbindung, insbesondere Tetraalkylammoniumhydroxid-Verbindung und insbesondere DMDPAH, und Wasser können im Wesentlichen beliebig eingestellt werden, solange gewährleistet ist, dass gemäß (2) mindestens ein Silikat durch Kristallisation erhalten wird.

Gemäß einer bevorzugten Ausführungsform werden die Mengen an eingesetztem Siliciumdioxid und/oder aus Precursor resultierendem Siliciumdioxid, Tetraalkylammoniumhydroxid-Verbindung und Wasser so gewählt, dass die gemäß (1) erhaltene kolloidale Lösung Siliciumdioxid, Tetraalkylammoniumhydroxid-Verbindung und Wasser in Gewichtsverhältnissen im Bereich von 1 : (0,4-10) : (4-12) enthält. Weiterhin sind hinsichtlich der oben genannten Bereiche Wassergehalte bis hin zu 15 möglich, wobei als untere Grenze beispielsweise 3 zu nennen ist. Demgemäß kann die gemäß (1) erhaltene kolloidale Lösung Siliciumdioxid, Tetraalkylammoniumhydroxid-Verbindung und Wasser in Gewichtsverhältnissen im Bereich von 1 : (0,4-10) : (3-15) enthalten. Weiter kann erfindungsgemäß der Wassergehalt im Bereich von 4 bis 15 oder von 5 bis 15 oder von 6 bis 15 oder von 7 bis 15 oder von 8 bis 15 oder von 9 bis 15 oder von 10 bis 15 oder von 11 bis 15 oder von 12 bis 15 oder von 13 bis 15 oder von 14 bis 15 oder von 3 bis 14 oder von 3 bis 13 oder von 3 bis 12 oder von 3 bis 11 oder von 3 bis 10 oder von 3 bis 9 oder von 3 bis 8 oder von 3 bis 7 oder von 3 bis 6 oder von 3 bis 5 oder von 3 bis 4 liegen. Weiter bevorzugte Bereiche sind beispielsweise von 4 bis 14,5 oder von 5 bis 14 oder von 6 bis 13,5 oder von 7 bis 13 oder von 7,5 bis 12,5. Der Gehalt an Tetraalkylammoniumhydroxid-Verbindung kann erfindungsgemäß beispielsweise im Bereich von 0,5 bis 9 oder von 0,6 bis 8 oder von 0,7 bis 7 oder von 0,8 bis 6 oder von 0,9 bis 5 oder von 1,0 bis 4 oder von 1,1 bis 3 oder von 1,2 bis 2 liegen.

Gemäß einer besonders bevorzugten Ausführungsform der vorliegenden Erfindung enthält die gemäß (1) erhaltene kolloidale Lösung SiO₂, DMDPAH und Wasser in den Gewichtsverhältnissen SiO₂ : DMDPAH : Wasser gleich 1 : (0,4-10) : (4-12), weiter bevorzugt gleich 1 : (0,5-8) : (4-12), weiter bevorzugt gleich 1 : (0,6-6) : (4-12), weiter bevorzugt gleich 1 : (0,8-4) : (4-12), weiter bevorzugt gleich 1 : (1-2) : (4-12), weiter bevorzugt gleich 1 : (1,1-1,5): (4-12), wobei der Wasseranteil jeweils weiter bevorzugt im Bereich von (5-12), weiter bevorzugt im Bereich von (6-12), weiter bevorzugt im Bereich von (7-12), weiter bevorzugt im Bereich von (8-12), weiter bevorzugt im Bereich von (9-12) und weiter bevorzugt im Bereich von (10-12) liegt.

Demgemäß enthält die gemäß (1) erhaltene, in (2) zu erwärmende kolloidale Lösung SiO₂, DMDPAH und Wasser besonders bevorzugt in den Gewichtsverhältnissen SiO₂ : DMDPAH : Wasser gleich 1 : (1-2): (10-12).

### Siliciumdioxidquelle

Als Siliciumdioxidquelle kann im Rahmen der vorliegenden Erfindung gemäß (1) grundsätzlich jede geeignete Verbindung, insbesondere jede geeignete Verbindung, die entweder Siliciumdioxid enthält oder aus der Siliciumdioxid gebildet werden kann (Siliciumdioxid-Precursor), eingesetzt werden. In diesem Zusammenhang sind sowohl kolloidales Siliciumdioxid als auch geeignete Silikonharze als auch so genanntes "wet process"-Siliciumdioxid als auch so genanntes "dry process"-Siliciumdioxid zu nennen. In diesen Fällen handelt es sich ganz besonders bevorzugt um amorphes Siliciumdioxid, wobei die Größe der Siliciumdioxidpartikel beispielsweise im Bereich von 5 bis 100 nm liegt und die Oberfläche der Siliciumdioxidpartikel im Bereich von 50 bis 500 m²/g liegt. Kolloidales Siliciumdioxid ist unter anderem etwa kommerziell erhältlich als Ludox®, Syton®, Naico® oder Snowtex®. "Wet process"-Siliciumdioxid ist unter anderem etwa kommerziell erhältlich als Hi-Sil®, Ultrasil®, Vulcasil®, Santocel®, Valron-Estersil®, Tokusil® oder Nipsil®. "Dry process"-Siliciumdioxid ist unter anderem etwa kommerziell erhältlich als Aerosil®, Reolosil®, Cab-O-Sil®, Fransil® oder ArcSilica®. Als Precursor-Verbindung sind beispielsweise Tetraalkylorthosilikate zu nennen. Bevorzugt wird im Rahmen der vorliegenden Erfindung amorphes Siliciumdioxid als Siliciumdioxid-Quelle eingesetzt.

Demgemäß betrifft die vorliegende Erfindung auch ein wie oben beschriebenes Verfahren, wobei als Siliciumdioxidquelle gemäß (1) amorphes Siliciumdioxid eingesetzt wird.

Hierbei kann grundsätzlich jedes geeignete amorphe Siliciumdioxid verwendet werden. Bevorzugt wird amorphes Siliciumdioxid mit einer spezifischen Oberfläche (BET, Brunauer-Emmet-Teller; bestimmt gemäß DIN 66131 durch Stickstoffadsorption bei 77 K) im Bereich von 10 bis 400 m²/g, bevorzugt im Bereich von 10 bis 100 m²/g und besonders bevorzugt im Bereich von 10 bis 50 m²/g. Weitere bevorzugte Bereiche sind 50 bis 100 m²/g oder 100 bis 300 m²/g oder 300 bis 400 m²/g.

### Heteroatom-Quelle

Wird gemäß (1) im Rahmen einer Ausführungsform eine Gallium-Quelle als Heteroatomquelle eingesetzt und demgemäß bei der erfindungsgemäßen Herstellung des Silikates Gallium als Heteroatom in das Silikatgitter eingebaut, so können generell solche Gallium-Quellen verwendet werden, die durch ihre chemische Beschaffenheit in der kolloidalen Lösung gemäß (1) beim Erwärmen im Rahmen der hydrothermalen Kristallisation gemäß (2) den Einbau von Ga in das Silikatgitter ermöglichen. Grundsätzlich können gemäß vorliegender Erfindung zwei oder mehr geeignete Gallium-Quellen gemäß (1) eingesetzt werden. Insbesondere bevorzugt wird im Rahmen der vorliegenden Erfindung Galliumnitrat als Gallium-Quelle verwendet.

Wird gemäß (1) im Rahmen einer weiteren Ausführungsform eine Zink-Quelle als Heteroatomquelle eingesetzt und demgemäß bei der erfindungsgemäßen Herstellung des Silikates Zink als Heteroatom in das Silikatgitter eingebaut, so können generell solche Zink-Quellen verwendet werden, die durch ihre chemische Beschaffenheit in der kolloidalen Lösung gemäß (1) beim Erwärmen im Rahmen der hydrothermalen Kristallisation gemäß (2) den Einbau von Zn in das Silikatgitter ermöglichen. Grundsätzlich können gemäß vorliegender Erfindung zwei oder mehr geeignete Zink-Quellen gemäß (1) eingesetzt werden. Insbesondere bevorzugt wird im Rahmen der vorliegenden Erfindung Zinknitrat als Zinkquelle verwendet.

Grundsätzlich umfasst die vorliegende Erfindung auch Ausführungsformen, bei denen ein Silikat hergestellt wird, das sowohl Gallium als auch Zink im Silikatgitter aufweist. In diesem Fall ist es möglich, dass gemäß (1) sowohl mindestens eine geeignete Gallium-Quelle als auch mindestens eine geeignete Zink-Quelle eingesetzt wird, wobei die Verwendung von Gallium- und Zinknitrat besonders bevorzugt ist.

Daher betrifft die vorliegende Erfindung auch ein wie oben beschriebenes Verfahren, wobei als Heteroatomquelle Galliumnitrat und/oder Zinknitrat eingesetzt wird.

### Kristallisationshilfsmittel

Als Kristallisationshilfsmittel kann grundsätzlich sowohl das erfindungsgemäß aus (2) erhaltene Schichtsilikat der bevorzugten Struktur RUB-39, das im Silikatgitter Ga oder Zn oder Ga und Zn enthält, oder das, wie unten beschrieben, erfindungsgemäß erhaltene Gerüstsilikat der bevorzugten Struktur RRO, das im Silikatgitter Ga oder Zn oder Ga und Zn enthält, oder ein Gemisch aus diesem Schichtsilikat und diesem Gerüstsilikat eingesetzt werden.

Ebenso ist es möglich, als Kristallisationshilfsmittel gemäß (1) ein Schichtsilikat einzusetzen, das in seiner Struktur dem gemäß (2) erhaltenen Schichtsilikat entspricht, jedoch entweder kein Heteroatom oder ein anderes Heteroatom als Ga und/oder Zn enthält. Weiter ist es möglich, als Kristallisationshilfsmittel gemäß (1 ) ein Gerüstsilikat einzusetzen, das in seiner Struktur dem, wie unten beschrieben, erfindungsgemäß erhaltenen Gerüstsilikat entspricht, jedoch entweder kein Heteroatom oder ein anderes Heteroatom als Ga und/oder Zn enthält. Ebenso ist es möglich, ein geeignetes Gemisch aus mindestens einem dieser Schichtsilikate und mindestens einem dieser Gerüstsilikate einzusetzen.

Bevorzugt wird im Rahmen der vorliegenden Erfindung als Kristallisationshilfsmittel gemäß (1) ein Schichtsilikat der Struktur RUB-39 eingesetzt, das entweder kein Heteroatom oder als Heteroatom Ga und/oder Zn oder als Heteroatom ein anderes Heteroatom als Ga und/oder Zn wie beispielsweise Al, B, Fe, Ti, Sn, Ge, Zr, V, oder Nb enthält oder als Heteroatom Ga und/oder Zn und zusätzlich mindestens ein weiteres Heteroatom wie beispielsweise Al, B, Fe, Ti, Sn, Ge, Zr, V, oder Nb enthält.

Besonders bevorzugt wird im Rahmen der vorliegenden Erfindung als Kristallisationshilfsmittel gemäß (1) ein Schichtsilikat der Struktur RUB-39 eingesetzt, das kein Heteroatom enthält. Ein solches Schichtsilikat der Struktur RUB-39, das kein Heteroatom enthält, wird im Rahmen der vorliegenden Erfindung als Si-RUB-39 bezeichnet.

Daher betrifft die vorliegende Erfindung auch ein wie oben beschriebenes Verfahren, wobei in (1) als Kristallisationshilfsmittel ein Schichtsilikat der Struktur Si-RUB-39 eingesetzt wird.

Insbesondere im Vergleich zu einem Verfahren, in dem kein Silikat der Struktur RUB-39 als Kristallisationshilfsmittel zugesetzt wurde und für das Kristallisationszeiten von etwa 15 bis 45 Tagen typisch sind - wie dies etwa in der WO 2005/100242 A1 oder in Wang et al. beschrieben ist -, konnte durch das erfindungsgemäße Verfahren überraschenderweise für die Herstellung der Ga und/oder Zn enthaltenden Silikate eine erhebliche Verkürzung der hydrothermalen Kristallisationszeit auf deutlich weniger als 15 Tage, sogar auf weniger als 10 Tage, wie beispielsweise auf 7 bis 9 Tage erreicht werden.

Demgemäß beschreibt die vorliegende Erfindung auch die Verwendung eines Schichtsilikates der Struktur Si-RUB-39 als Kristallisationshilfsmittel zur Verkürzung der Kristallisationszeit der hydrothermalen Synthese bei der Herstellung eines Ga und/oder Zn enthaltenden Silikates der Struktur RUB-39, bevorzugt zur Verkürzung der Kristallisationszeit der hydrothermalen Synthese auf weniger als 10 Tage, insbesondere bevorzugt auf einen Zeitraum im Bereich von 7 bis 9 Tagen.

Was die Menge an Kristallisationshilfsmittel anbelangt, so existieren grundsätzlich keine Beschränkungen, solange die erfindungsgemäße Herstellung des Silikates und insbesondere der dabei erzielte Vorteil kurzer Kristallisationszeiten der hydrothermalen Synthese gewährleistet sind.

Beispielsweise bevorzugt wird das in (1) als Kristallisationshilfsmittel eingesetzte Silikat in einer Menge, bezogen auf Siliciumdioxid und/oder auf im Siliciumdioxid-Precursor enthaltenes Siliciumdioxid, von bis zu 5 Gew.-%, weiter bevorzugt von 0,001 bis 5 Gew.-%, weiter bevorzugt von 0,005 bis 1 Gew.-%, weiter bevorzugt vom 0,005 bis 0,1 Gew.-% und insbesondere bevorzugt von 0,01 bis 0,05 Gew.-%, zugegeben.

Daher betrifft die vorliegende Erfindung auch ein wie oben beschriebenes Verfahren, wobei in (1) das Kristallisationshilfsmittel, bezogen auf Siliciumdioxid und/oder auf im Siliciumdioxid-Precursor enthaltenes Siliciumdioxid, in einer Menge von 0,001 bis 5 Gew.-%, bevorzugt von 0,01 bis 0,05 Gew.-%, zugegeben wird.

### Herstellung des Schichtsilikats der Struktur Si-RUB-39

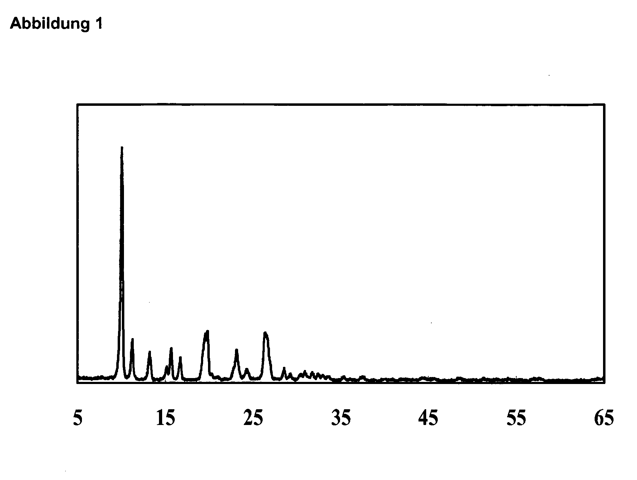

Grundsätzlich existieren im Hinblick auf die Herstellung des Schichtsilikates der Struktur Si-RUB-39 keine Beschränkungen. Beispielsweise bevorzugt kann Si-RUB-39 hergestellt werden wie im bereits oben zitierten Wang et al., Chem. Mater. 17, 2005 S.43-49 beschrieben. Insbesondere ist in diesem Zusammenhang auf S.44 dieses wissenschaftlichen Artikels hinzuweisen, wo in der rechten Spalte unter der Überschrift "Experimental" in den ersten beiden Abschnitten des Unterpunktes "Synthesis" die Herstellung von "as-synthesized RUB-39", der dem Si-RUB-39 der vorliegenden Erfindung entspricht, beschrieben wird. Was die Charakterisierung des gemäß Wang et al. hergestellten Si-RUB-39 anbelangt, so sei insbesondere auf die Abbildungen 1 bis 4 dieses Artikels und die dazugehörigen Textstellen verwiesen.

Als ebenfalls bevorzugte Herstellungsmöglichkeit sei auf das Verfahren verwiesen, das in der bereits oben zitierten WO 2005/100242 A1 allgemein und insbesondere dort in den Beispielen 1 und 2 offenbart wird.

### Gemäß (1) erhaltene kolloidale wässrige Lösung

Die gemäß Schritt (1) des erfindungsgemäßen Verfahren erhaltene Lösung, die in (2) erwärmt und einer hydrothermalen Kristallisation unterworfen wird, kann grundsätzlich sämtliche Zusammensetzungen aufweisen, solange gewährleistet ist, dass gemäß (2) das erfindungsgemäße Silikat, das im Silikatgitter Ga und/oder Zn aufweist, erhalten wird.

Erfindungsgemäß bevorzugte Zusammensetzungen im Hinblick auf die Gewichtsverhältnisse von Siliciumdioxid : Tetraalkylammoniumverbindung : Wasser wurden bereits weiter oben beschrieben.

Im Falle, dass erfindungsgemäß ein als Heteroatom Gallium enthaltendes Silikat, insbesondere ein Ga-RUB-39, gemäß (2) hergestellt wird, weist die gemäß (1) erhaltene Lösung vor dem Erwärmen gemäß (2) Silicium, berechnet als SiO₂, Gallium, berechnet als Ga₂O₃, DMDPAH als Tetraalkylammoniumverbindung, Wasser und Kristallisationshilfsmittel
SiO₂ : Ga₂O₃ : DMDPAH : Wasser: Kristallisationshilfsmittel
bevorzugt in den Gewichtsverhältnissen
1 : (0,001 - 0,05) : (0,4 - 10) : (4 - 12) : (0,001 - 5),
weiter bevorzugt in den Gewichtsverhältnissen
1 : (0,002 - 0,04): (0,6 - 5) : (6 - 12) : (0,002 - 1),
weiter bevorzugt in den Gewichtsverhältnissen
1 : (0,003 - 0,03) : (0,8 - 3) : (8 - 12) : (0,005 - 0,1),
und insbesondere bevorzugt in den Gewichtsverhältnissen
1 : (0,005 - 0,02): (1 - 2) : (10 - 12) : (0,01 - 0,05)
   auf.

Im Falle, dass erfindungsgemäß ein als Heteroatom Zink enthaltendes Silikat, insbesondere ein Zn-RUB-39, gemäß (2) hergestellt wird, weist die gemäß (1) erhaltene Lösung vor dem Erwärmen gemäß (2) Silicium, berechnet als SiO₂, Zink, berechnet als ZnO, DMDPAH als Tetraalkylammoniumverbindung, Wasser und Kristallisationshilfsmittel
SiO₂ : ZnO : DMDPAH : Wasser: Kristallisationshilfsmittel
bevorzugt in den Gewichtsverhältnissen
1 : (0,001 - 0,05): (0,4 - 10) : (4 - 12): (0,001 - 5),
weiter bevorzugt in den Gewichtsverhältnissen
1 : (0,002 - 0,05) : (0,6 - 5) : (6 - 12) : (0,002 - 1),
weiter bevorzugt in den Gewichtsverhältnissen
1 : (0,005 - 0,05) : (0,8 - 3) : (8 - 12) : (0,005 - 0,1),
und insbesondere bevorzugt in den Gewichtsverhältnissen
1 : (0,01 - 0,05) : (1 - 2) : (10 -12) : (0,01 - 0,05)
auf.

Gegebenenfalls kann, sollte dies erforderlich sein, die gemäß (1) erhaltene Lösung, enthaltend Siliciumdioxidquelle, Heteroatomquelle, Tetraalkylammoniumverbindung, Base und Kristallisationshilfsmittel, vor dem Schritt (2) geeignet aufkonzentriert werden, um oben genannte Zusammensetzungen aufzuweisen. Das Aufkonzentrieren kann im Rahmen der vorliegenden Erfindung generell über sämtliche geeigneten Methoden realisiert werden, beispielsweise über Anlegen eines geeigneten Unterdrucks oder über Erwärmen auf eine bestimmte geeignete Temperatur oder auch über eine Kombination dieser Methoden. Bevorzugt kann zum Aufkonzentrieren erfindungsgemäß die gemäß (1) erhaltene Mischung bei bevorzugt Umgebungsdruck auf eine geeignete Temperatur erwärmt werden, bei der der gewünschte Teil des in der Mischung enthaltenen Wassers entfernt wird, so dass die oben angegebenen Zusammensetzungen erreicht werden. Als mindestens eine geeignete Vorrichtung zum Aufkonzentrieren seien unter anderem Rotationsverdampfer oder Öfen genannt. Besonders bevorzugt ist ein Ofen. Bevorzugt sind diesbezüglich unter anderem Vorrichtungen, die eine Wasserentfernung bei vermindertem Druck und damit bei niedrigen Temperaturen erlauben, wie beispielsweise unter Vakuum betriebene Rotationsverdampfer. Dabei kann die gemäß (1) erhaltene Mischung bevorzugt auf Temperaturen im Bereich von 50 bis 90 °C, weiter bevorzugt von 55 bis 85 °C, weiter bevorzugt von 60 bis 80 °C und insbesondere bevorzugt von 65 bis 75 °C erwärmt und bei der entsprechend gewählten Temperatur solange gehalten werden, bis die gewünschte Menge an Wasser entfernt ist. Gemäß einer bevorzugten Ausführungsform des erfindungsgemäßen Verfahrens erfolgt hierbei das Aufheizen der Mischung von bevorzugt Raumtemperatur auf die zum Aufkonzentrieren gewählten Temperaturen mit Aufheizraten im Bereich von 0,1 bis 12 °C/h, weiter bevorzugt von 1 bis 11 °C/h und besonders bevorzugt im Bereich von 5 bis 10 °C/h.

Gemäß weiteren Ausführungsformen der vorliegenden Erfindung ist es möglich, dass das erfindungsgemäße Silikat, das Ga und/oder Zn im Gitter aufweist, mindestens ein weiteres Heteroatom aufweist. Beispielsweise sind hier Aluminium, Bor, Eisen, Zinn, Germanium, Zirkon, Vanadium oder Niob zu nennen.

Wird beispielsweise Aluminium eingebaut, so kann die gemäß (1) hergestellte Lösung zusätzlich eine Aluminium-Quelle wie beispielsweise metallisches Aluminium wie beispielsweise Aluminiumpulver oder geeignete Aluminate wie beispielsweise Alkalialuminate und/oder Aluminiumalkoholate wie beispielsweise Aluminiumtrüsopropylat enthalten. Unter anderem bevorzugt wird bei dem Einbau von Aluminium Natriumaluminat als Aluminiumquelle verwendet.

Wird beispielsweise Bor eingebaut, so kann die gemäß (1) hergestellte Lösung zusätzlich eine Bor-Quelle beispielsweise freie Borsäure und/oder Borate und/oder Borsäureester wie etwa Borsäuretriethylester oder Borsäuretrimethylester enthalten. Bevorzugt wird bei dem Einbau von Bor beispielsweise Borsäure als Borquelle verwendet.

Wird beispielsweise Zinn eingebaut, so kann die gemäß (1) hergestellte Lösung zusätzlich eine Zinn-Quelle wie beispielsweise Zinnchloride und/oder metallorganische Zinnverbindungen wie etwa Zinnalkoholate oder Chelate wie etwa Zinnacetylacetonat enthalten.

Wird beispielsweise Zirkon eingebaut, so kann die gemäß (1) hergestellte Lösung zusätzlich eine Zirkon-Quelle wie beispielsweise Zirkonchlorid und/oder Zirkonalkoholate enthalten.

Wird beispielsweise Vanadium oder Germanium oder Niob eingebaut, so kann die gemäß (1) hergestellte Lösung zusätzlich eine Vanadium-, Germanium- oder Niob-Quelle wie beispielsweise Vanadiumchlorid oder Germaniumchlorid oder Niobchlorid enthalten.

Demgemäß betrifft die vorliegende Erfindung auch ein wie oben beschriebenes Verfahren und die durch dieses Verfahren erhältlichen Silikate, wobei gemäß (1) als weitere Heteroatomquelle zusätzlich eine Heteroatomquelle, ausgewählt aus der Gruppe bestehend aus einer Aluminium-, einer Bor-, einer Eisen-, einer Titan-, einer Zinn-, einer Germanium-, einer Zirkon-, einer Vanadium-, einer Niob-Quelle und einem Gemisch aus zwei oder mehr dieser Heteroatomquellen, eingesetzt wird.

Je nach Art der Atome, die in das Gitter des erfindungsgemäßen Silikates eingebaut werden, kann ein negativ geladenes Gerüst entstehen, das es beispielsweise ermöglicht, das Silikat mit Kationen zu beladen. Als solche sind unter anderem die Ammoniumionen R₁R₂R₃R₄N⁺ der Templatverbindungen, Platin-, Palladium-, Rhodium- oder Rutheniumkationen, Goldkationen, Alkalimetallkationen wie beispielsweise Natrium- oder Kalium-Ionen oder Erdalkalimetallkationen wie beispielsweise Magnesium- oder Calcium-Ionen zu erwähnen. Ebenso sind in diesem Zusammenhang beispielsweise Molybdän, Wolfram, Rhenium oder Silber zu erwähnen. So sind einerseits die erfindungsgemäß hergestellten Silikate der Struktur RUB-39 und/oder die weiter unten beschriebenen Silikate der Struktur RRO (RUB-41) beladbar.

### Hydrothermale Kristallisation in Schritt (2)

Die gemäß (1) erhaltene Mischung wird, gegebenenfalls nach Aufkonzentrieren, erfindungsgemäß in (2) einer hydrothermalen Kristallisation unterworfen. Dabei wird ein Silikat, insbesondere ein Schichtsilikat der Struktur Ga-RUB-39 oder Zn-RUB-39 oder Ga/Zn-RUB-39 erhalten, das im Silikatgitter als Heteroatom Ga und/oder Zn enthält und das in Form von Primärkristallen, suspendiert in der Mutterlauge, erhalten wird.

Grundsätzlich ist es möglich, die gemäß (1) erhaltene Lösung gemäß (2) unter jedem geeigneten Druck bei jeder geeigneten Temperatur zu erwärmen, solange gewährleistet ist, dass in der kolloidalen Lösung das Silikat, insbesondere das Silikat der Struktur RUB-39 kristallisiert. Bevorzugt sind hierbei Temperaturen, die bei dem gewählten Druck oberhalb des Siedepunktes der gemäß (1) erhaltenen Mischung liegen. Weiter bevorzugt sind Temperaturen bis zu 180 °C bei Normaldruck. Gemäß einer besonders bevorzugten Ausführungsform des erfindungsgemäßen Verfahrens wird die Kristallisation gemäß (2) in einem Autoklaven durchgeführt.

Der Begriff "Normaldruck", wie er im Rahmen der vorliegenden Erfindung verwendet wird, bezeichnet einen Druck von idealer Weise 101.325 Pa, der jedoch innerhalb der dem Fachmann bekannten Grenzen Schwankungen unterworfen sein kann. Beispielsweise kann der Druck im Bereich von 95.000 bis 106.000 oder von 96.000 bis 105.000 oder 97.000 bis 104.000 oder von 98.000 bis 103.000 oder von 99.000 bis 102.000 Pa liegen.

Bevorzugt liegt die gemäß (2) verwendete Temperatur im Autoklaven im Bereich von 100 bis 180 °C, weiter bevorzugt im Bereich von 110 bis 175 °C, weiter bevorzugt im Bereich von 120 bis 170 °C, weiter bevorzugt im Bereich von 130 bis 165 °C und insbesondere bevorzugt im Bereich von 140 bis 160 °C.

Diese Temperatur, auf die die gemäß (1) erhaltene kolloidale Lösung gemäß (2) erwärmt wird, kann grundsätzlich solange gehalten werden, bis die Kristallisation im erwünschten Umfang erfolgt ist. Bevorzugt sind hierbei Zeiten von bis zu 360 h, weiter bevorzugt von bis zu 300 h, weiter bevorzugt von bis zu 240 h, weiter bevorzugt von 12 h bis 240 h, weiter bevorzugt von 24 h bis 240 h, weiter bevorzugt von 120 h bis 240 h, weiter bevorzugt von 144 h bis 240 h, und weiter bevorzugt von 168 h bis 216 h.

Insbesondere bevorzugt ist beispielsweise eine hydrothermale Kristallisation im Bereich von 168 h bis 216 h bei einer Temperatur im Bereich von 140 bis 160 °C.

Die Lösung wird zur Kristallisation gemäß (2) vorzugsweise geeignet gerührt. Ebenso ist es möglich, das Reaktionsgefäß, in dem die Kristallisation durchgeführt wird, geeignet zu rotieren.

Im Vergleich zu einem Verfahren, in dem kein Silikat der Struktur RUB-39 als Kristallisationshilfsmittel zugesetzt wurde und für das Kristallisationszeiten von etwa 15 bis 45 Tagen typisch sind, konnte durch das erfindungsgemäße Verfahren, in dem die neuen Ga und/oder Zn enthaltenden Silikate erhalten werden, eine erhebliche Verkürzung der Kristallisationszeit auf deutlich weniger als 15 Tage, sogar auf weniger als 10 Tage, wie beispielsweise Kristallisationszeiten von 7 bis 9 Tagen erreicht werden.

Demgemäß betrifft die vorliegende Erfindung auch ein wie oben beschriebenes Verfahren, das dadurch gekennzeichnet ist, dass die gemäß (1) erhaltene Lösung gemäß (2) für einen Zeitraum im Bereich von 7 bis 9 Tagen hydrothermal kristallisiert wird.

### Aufarbeitung

Gemäß einer Ausführungsform des erfindungsgemäßen Verfahrens kann die Kristallisation gemäß (2) durch geeignetes Quenchen abgebrochen werden. Hierbei ist es besonders bevorzugt, die Suspension mit Wasser zu versetzen, das eine Temperatur aufweist, die zum Abbruch der Kristallisation geeignet ist.

Aus der aus (2) erhaltenen Suspension wird das mindestens eine Silikat gemäß einer Ausführungsform des erfindungsgemäßen Verfahrens in mindestens einem Schritt geeignet abgetrennt. Diese Abtrennung kann beispielsweise über Filtrations-, Ultrafiltrations-, Diafiltrations-, Zentrifugierverfahren oder etwa Sprühtrocknungs- und Sprühgranulierverfahren erfolgen. Bevorzugt ist die Abtrennung über Sprühtrocknung oder Filtration. Dabei kann die Abtrennung beispielsweise über Sprühverfahren ausgehen von der gemäß (2) erhaltenen Suspension als solcher oder von einer Suspension, die aus einem Aufkonzentrieren der gemäß (2) erhaltenen Suspension resultiert. Dieses Aufkonzentrieren kann beispielsweise durch Eindampfen, wie beispielsweise Eindampfen unter vermindertem Druck, oder durch Cross-Flow-Filtration erfolgen. Ebenso ist es möglich, die gemäß (2) erhaltene Suspension dadurch aufzukonzentrieren, dass die gemäß (2) erhaltene Suspension geteilt wird und der in einem der beiden Teile vorhandene Feststoff durch beispielsweise Filtrations-, Ultrafiltrations-, Diafiltrations- oder Zentrifugierverfahren abgetrennt wird und nach einem möglichen Wasch- und/oder Trocknungsschritt im anderen Teil der Suspension suspendiert wird. Das über die Abtrenn- und Trocknungsverfahren der Sprühtrocknung und Sprühgranulationstrocknung wie beispielsweise der Wirbelschichtsprühgranulationstrocknung erhaltene Sprühgut kann dabei Voll- und/oder Hohlkugeln enthalten bzw. im Wesentlichen aus solchen Kugeln bestehen, die beispielsweise einen Durchmesser im Bereich von 5 bis 500 µm oder auch 5 bis 300 µm aufweisen können. Als Zerstäuberdüsen beim Versprühen können beispielsweise Ein- oder Mehrstoffdüsen verwendet werden. Denkbar ist auch der Einsatz eines Rotationszerstäubers. Mögliche Eintrittstemperaturen des verwendeten Trägergases liegen beispielsweise im Bereich von 200 bis 600 °C, bevorzugt im Bereich von 225 bis 550 °C und weiter bevorzugt im Bereich von 300 bis 500 °C. Die Austrittstemperatur des Trägergases liegt beispielsweise im Bereich von 50 bis 200 °C. Als Trägergase sind beispielsweise Luft, Magerluft oder Sauerstoff-Stickstoffgemische mit einem Sauerstoffanteil von bis zu 10 Vol.%, bevorzugt von bis zu 5 Vol.-%, weiter bevorzugt von weniger als 5 Vol.% wie beispielsweise von bis zu 2 Vol.% zu nennen. Die Sprühverfahren können im Gegenstrom oder im Gleichstrom durchgeführt werden.

Demgemäß beschreibt die vorliegende Erfindung auch ein wie oben beschriebenes Verfahren, zusätzlich umfassend
(3) Abtrennung des mindestens einen, Silicium, Sauerstoff und mindestens ein Heteroatom enthaltenden Silikats aus der gemäß (2) erhaltenen Suspension.

Das wie oben beschrieben abgetrennte mindestens eine Silikat wird gemäß einer bevorzugten Ausführungsform des erfindungsgemäßen Verfahrens gewaschen und/oder getrocknet.

Demgemäß beschreibt die vorliegende Erfindung auch das wie oben beschriebene Verfahren, zusätzlich umfassend
(4) Waschen
   und/oder
(5) Trocknen
   des gemäß (3) erhaltenen Silikats.

Dabei kann sich an die Abtrennung mindestens ein Waschschritt und/oder mindestens ein Trocknungsschritt anschließen, wobei bei mindestens zwei Waschschritten gleiche oder verschiedene Waschmittel oder Waschmittelgemische und bei mindestens zwei Trocknungsschritten gleiche oder verschiedene Trocknungstemperaturen verwendet werden können.

Die Trocknungstemperaturen liegen hierbei bevorzugt im Bereich von Raumtemperatur bis 150 °C, weiter bevorzugt von 60 bis 140 °C, weiter bevorzugt von 80 bis 130 °C und weiter bevorzugt im Bereich von 100 bis 120 °C.

Die Trocknungsdauern liegen bevorzugt im Bereich von 6 bis 48 h, weiter bevorzugt von 12 bis 36 h.

Demgemäß beschreibt die vorliegende Erfindung auch das wie oben beschriebene Verfahren, wobei das Silikat gemäß (4) mit Wasser gewaschen und/oder gemäß (5) bei einer Temperatur im Bereich von Raumtemperatur bis 150 °C getrocknet wird.

Als Waschmittel können beispielsweise Wasser, Alkohole wie beispielsweise Methanol, Ethanol oder Propanol, oder Gemische aus zwei oder mehr davon eingesetzt werden. Als Mischungen seien beispielsweise Mischungen aus zwei oder mehr Alkoholen wie beispielsweise Methanol und Ethanol oder Methanol und Propanol oder Ethanol und Propanol oder Methanol und Ethanol und Propanol, oder Mischungen aus Wasser und mindestens einem Alkohol wie beispielsweise Wasser und Methanol oder Wasser und Ethanol oder Wasser und Propanol oder Wasser und Methanol und Ethanol oder Wasser und Methanol und Propanol oder Wasser und Ethanol und Propanol oder Wasser und Methanol und Ethanol und Propanol genannt. Bevorzugt sind Wasser oder eine Mischung aus Wasser und mindestens einem Alkohol, bevorzugt Wasser und Ethanol, wobei Wasser als alleiniges Waschmittel ganz besonders bevorzugt ist.

Gemäß einer Ausführungsform des erfindungsgemäßen Verfahrens kann die Mutterlauge, die aus der Abtrennung des mindestens einen Silikats gemäß (3) erhalten wird und die gegebenenfalls nicht umgesetzte Edukte enthält, in den Schritt (1) des Verfahrens zurückgeführt werden.

Die oben beschriebene Abtrennung beispielsweise durch ein Sprühtrocknungs- oder Sprühgranulierverfahren hat den Vorteil, dass die Abtrennung des Silikates aus der gemäß (2) erhaltenen Suspension und die Trocknung des Silikates in einem einzigen Schritt durchgeführt werden können.

Daher betrifft die vorliegende Erfindung auch ein wie oben beschriebenes Verfahren, zusätzlich umfassend
(3) Abtrennung des mindestens einen, Silicium, Sauerstoff und mindestens ein Heteroatom enthaltenden Silikats aus der gemäß (2) erhaltenen Suspension,
(4) gegebenenfalls Waschen des gemäß (3) abgetrennten Silikats, bevorzugt Waschen mit Wasser,
(5) Trocknen des gemäß (3) oder (4) erhaltenen Silikats, bevorzugt bei einer Temperatur im Bereich von Raumtemperatur bis 150 °C.

### Schichtsilikat der Struktur RUB-39

Gemäß dem erfindungsgemäßen Verfahren wird ein Silikat, insbesondere ein Schichtsilikat der Struktur RUB-39, erhalten.

Das erfindungsgemäß insbesondere erhaltene Schichtsilikat der Struktur RUB-39, enthaltend Ga und/oder Zn, zeichnet sich dadurch aus, dass im entsprechenden Röntgenbeugungsmuster durch Cu K alpha 1-Strahlung mindestens die folgenden Reflexe auftreten:

| Intensität (%) | Beugungswinkel 2 θ / ° [Cu K(alpha 1)] |
|---|---|
| 100 | 8,0 - 8,4 |
| 11-21 | 11,0-11,4 |
| 13 - 23 | 13,2 - 13,6 |
| 5-15 | 18,0 - 18,4 |
| 7 - 17 | 18,4 - 18,8 |
| 19 - 29 | 19,9 - 20,0 |

wobei sich die Angabe 100 % auf die Intensität des höchsten Peaks im Röntgendiffraktogramm bezieht.

Demgemäß betrifft die vorliegende Erfindung auch ein Schichtsilikat, insbesondere ein Schichtsilikat der Struktur RUB-39, und insbesondere ein Schichtsilikat der Struktur RUB-39, im Silikatgitter enthaltend Ga und/oder Zn, das im Röntgenbeugungsmuster durch Cu K alpha 1-Strahlung mindestens die folgenden Reflexe aufweist:

| Intensität (%) | Beugungswinkel 2 θ / ° [Cu K(alpha 1)] |
|---|---|
| 100 | 8,0 - 8,4 |
| 11-21 | 11,0-11,4 |
| 13 - 23 | 13,2 - 13,6 |
| 5-15 | 18,0-18,4 |
| 7-17 | 18,4-18,8 |
| 19 - 29 | 19,9 - 20,0 |

wobei sich die Angabe 100 % auf die Intensität des höchsten Peaks im Röntgendiffraktogramm bezieht, wobei das Schichtsilikat erhältlich ist durch das wie oben beschriebene erfindungsgemäße Verfahren.

Insbesondere betrifft die vorliegende Erfindung ein Schichtsilikat der Struktur RUB-39, im Silikatgitter enthaltend Ga und/oder Zn, das im Röntgenbeugungsmuster durch Cu K alpha 1-Strahlung mindestens die folgenden Reflexe aufweist:

| Intensität (%) | Beugungswinkel 2 θ / ° [Cu K(alpha 1)] |
|---|---|
| 100 | 8,0 - 8,4 |
| 11-21 | 11,0-11,4 |
| 13 - 23 | 13,2 - 13,6 |
| 5 - 15 | 18,0 - 18,4 |
| 7-17 | 18,4-18,8 |
| 19 - 29 | 19,8 - 20,2 |
| 20 - 30 | 22,0 - 22,35 |
| 6 - 16 | 22,36 - 22,7 |
| 23 - 33 | 23,3 - 23,59 |
| 22 - 32 | 23,60 - 23,8 |

wobei sich die Angabe 100 % auf die Intensität des höchsten Peaks im Röntgendiffraktogramm bezieht.

### Gerüstsilikat der Struktur RRO

Gemäß einer weiteren Ausführungsform der vorliegenden Erfindung wird gemäß (6) das erhaltene Schichtsilikat der Struktur RUB-39, im Silikatgitter enthaltend Ga und/oder Zn, in mindestens einem zusätzlichen Schritt calciniert.

Dabei ist es grundsätzlich möglich, die Suspension, enthaltend das mindestens eine Silikat, direkt der Calcinierung zuzuführen. Bevorzugt wird das Silikat vor der Calcinierung aus der Suspension, wie oben beschrieben, gemäß (3) abgetrennt.

Vor der Calcinierung kann das aus der Suspension abgetrennte Silikat mindestens einem wie oben beschriebenen Waschschritt (4) und/oder mindestens einem wie oben beschriebenen Trocknungsschritt (5) unterworfen werden. Bevorzugt wird das aus der Suspension abgetrennte Silikat getrocknet und ohne Waschschritt der Calcinierung zugeführt.

Die Calcinierung gemäß (6) des gemäß (2) und/oder (3) und/oder (4) und/oder (5) erhaltenen Silikates erfolgt bevorzugt bei einer Temperatur im Bereich von bis zu 600 °C unter Erhalt eines Gerüstsilikates.

Gemäß einer bevorzugten Ausführungsform des erfindungsgemäßen Verfahrens erfolgt hierbei die Aufheizung des Silikates von Raumtemperatur auf eine Temperatur von bis zu 600 °C, wobei weiter bevorzugt die Aufheizrate im Bereich von 0,1 bis 12 °C/h, weiter bevorzugt von 1 bis 11 °C/h und besonders bevorzugt im Bereich von 5 bis 10 °C/h liegt.

Beispielsweise bevorzugt liegt diese Temperatur im Bereich von 200 bis 600 °C. Besonders bevorzugt sind Calcinierungstemperaturen im Bereich von 300 bis 600 °C. Weiter bevorzugt sind Calcinierungstemperaturen im Bereich von 400 bis 575 °C, insbesondere bevorzugt im Bereich von 450 bis 550 °C.

Gemäß einer möglichen Ausgestaltung des erfindungsgemäßen Verfahrens wird die Calcinierung temperaturgestaffelt durchgeführt. Der Begriff "temperaturgestaffelt", wie er im Rahmen der vorliegenden Erfindung verwendet wird, bezeichnet eine Calcinierung, bei der das zu calcinierende Silikat auf eine bestimmte Temperatur aufgeheizt wird, bei dieser Temperatur für eine bestimmte Zeit gehalten wird, und von dieser Temperatur auf mindestens eine weitere Temperatur aufgeheizt wird und dort wiederum für eine bestimmte Zeit gehalten wird.

Bevorzugt wird das zu calcinierende Silikat bei bis zu 4 Temperaturen, weiter bevorzugt bei bis zu 3 Temperaturen und besonders bevorzugt bei 2 Temperaturen gehalten.

Diesbezüglich liegt die erste Temperatur bevorzugt im Bereich von 500 bis 540 °C, weiter bevorzugt im Bereich von 505 bis 535 °C, weiter bevorzugt im Bereich von 510 bis 530 °C und insbesondere bevorzugt im Bereich von 515 bis 525 °C. Diese Temperatur wird bevorzugt für eine Zeit im Bereich von 8 bis 24 h, weiter bevorzugt von 9 bis 18 h und insbesondere von 10 bis 14 Stunden gehalten.

Die zweite Temperatur liegt bevorzugt im Bereich von größer 540 bis 600 °C, weiter bevorzugt im Bereich von 550 bis 580 °C und insbesondere bevorzugt im Bereich von 555 bis 570 °C. Diese Temperatur wird bevorzugt für eine Zeit im Bereich von 0,5 bis 6 h, weiter bevorzugt von 1 bis 4 h und insbesondere von 1 bis 3 Stunden gehalten.

Demgemäß betrifft die vorliegende Erfindung auch ein wie oben beschriebenes Verfahren, das dadurch gekennzeichnet ist, dass die Calcinierung temperaturgestaffelt im Bereich von bis zu 600 °C, bevorzugt von 300 bis 600 °C erfolgt.

Die Calcinierung kann in jeder geeigneten Atmosphäre erfolgen wie beispielsweise Luft, Magerluft, Stickstoff, Wasserdampf, synthetische Luft, Kohlendioxid. Bevorzugt erfolgt die Calcinierung unter Luft.

Die Calcinierung kann in jeder dafür geeigneten Vorrichtung durchgeführt werden. Bevorzugt erfolgt die Calcinierung in einem Drehrohr, in einem Bandcalcinierer, in einem Muffelofen, in situ in einer Vorrichtung, in der das Silikat zu einem späteren Zeitpunkt bestimmungsgemäß beispielsweise als Molekularsieb, Katalysator oder für eine andere, unten beschriebene Anwendung eingesetzt wird. Insbesondere bevorzugt sind hierbei Drehrohr und Bandcalcinierer.

Gemäß einer weiteren möglichen Ausführungsform der vorliegenden Erfindung, in der das gemäß (2) erhaltene Silikat bevorzugt über Sprühtrocknungs- oder Sprühgranulierverfahren aus der Suspension abgetrennt wird, werden die Bedingungen, unter denen die Abtrennung durchgeführt wird, so gewählt, dass während der Abtrennung zumindest ein Teil des Schichtsilikates zum Gerüstsilikat umgewandelt wird. Bevorzugt werden dabei Temperaturen während der Abtrennung gewählt, die mindestens 225 °C betragen. Diese Verfahrensvariante bietet den Vorteil, dass die Schritte Abtrennung, Trocknung und zumindest teilweise Calcinierung in einem einzigen Schritt zusammengefasst werden können.

Gemäß dem erfindungsgemäßen Verfahren wird nach dem Calcinieren ein Silikat, insbesondere ein Gerüstsilikat der Struktur RRO (RUB-41) erhalten.

Demgemäß betrifft die vorliegende Erfindung auch das wie oben beschriebene Verfahren, zusätzlich umfassend
(6) Calcinieren des gemäß (5) erhaltenen, mindestens einen, Silicium, Sauerstoff und mindestens ein Heteroatom enthaltenden Silikats, bevorzugt bei einer Temperatur im Bereich von 300 bis 600 °C, unter Erhalt eines Gerüstsilikates, bevorzugt eines Gerüstsilikates mit der röntgenografischen Zuordnung zum Typ RRO. Demgemäß betrifft die vorliegende Erfindung auch ein Silikat, insbesondere ein Gerüstsilikat der Struktur RRO, im Silikatgitter enthaltend Ga und/oder Zn, erhältlich durch das oben beschriebene Verfahren, umfassend die Calcinierung gemäß (6).

Ebenso betrifft die vorliegende Erfindung ein Gerüstsilikat der Struktur RRO, im Silikatgitter enthaltend Ga und/oder Zn, das insbesondere im Röntgenbeugungsmuster durch Cu K alpha 1-Strahlung mindestens die folgenden Reflexe aufweist:

| Intensität / % | Beugungswinkel 2θ / ° [cm K(alpha 1)] |
|---|---|
| 100 | 9,8 - 10,2 |
| 24-34 | 11,0-11,4 |
| 9-19 | 15,5-15,9 |
| 12 - 22 | 19,4 - 19,6 |
| 19 - 29 | 19,6 - 19,8 |

wobei sich die Angabe 100 % auf die Intensität des höchsten Peaks im Röntgendiffraktogramm bezieht.

Insbesondere betrifft die vorliegende Erfindung das Gerüstsilikat der Struktur RRO, im Silikatgitter enthaltend Ga und/oder Zn, das insbesondere im Röntgenbeugungsmuster durch Cu K alpha 1-Strahlung mindestens die folgenden Reflexe aufweist:

| Intensität / % | Beugungswinkel 2θ / ° [Cu K(alpha 1)] |
|---|---|
| 100 | 9,8 - 10,2 |
| 24 - 34 | 11,0-11,4 |
| 9-19 | 15,5-15,9 |
| 12-22 | 19,4 - 19,6 |
| 19 - 29 | 19,6 - 19,8 |
| 8 - 18 | 26,2 - < 26,3 |
| 8 - 18 | 26,3 - < 26,4 |
| 13 - 23 | 26,4 - 26,6 |

wobei sich die Angabe 100 % auf die Intensität des höchsten Peaks im Röntgendiffraktogramm bezieht.

Die erfindungsgemäßen oder erfindungsgemäß hergestellten Gerüstsilikate liegen bevorzugt in der Raumgruppe P 2/c vor. Im Falle, dass als Edukte, wie oben beschrieben, Tetraalkylammoniumhydroxid und Siliciumdioxid und/oder Siliciumdioxid-Precursor eingesetzt wurden, weisen die erfindungsgemäß hergestellten Gerüstsilikate bevorzugt folgende Gitterparameter, bestimmt über Rietveld-Analyse auf:
- a = 7,34(1) Å
- b = 8,72(1) Å
- c = 17,17(1) Å
- beta = 114,2(1) °

Gemäß 29-Si MAS NMR-Spektroskopie fehlt bei den erfindungsgemäßen Gerüstsilikaten das bei den oben beschriebenen, erfindungsgemäßen Schichtsilikaten gefundene Tieffeld-Signal bei in etwa 104 ppm, das charakteristisch ist für eine schichtsilikattypische Silanolgruppe.

Die erfindungsgemäßen Gerüstsilikate weisen bevorzugt 8 MR- und 10 MR-Kanäle auf, wobei die 8 MR-Kanäle insbesondere bevorzugt parallel zu c der Elementarzelle, wie oben angegeben, und die 10 MR-Kanäle insbesondere bevorzugt parallel zu a der Elementarzelle, wie oben angegeben, verlaufen. Hinsichtlich der Definition der 8 MR-und 10 MR-Kanäle sei auf Ch. Baerlocher, W.M. Meier, D.H. Olson, Atlas of Zeolite Framework Types, 5. Auflage, 2001, Elsevier, Seiten 10 - 15 verwiesen.

Insbesondere zeichnen sich die erfindungsgemäßen Gerüstsilikate durch eine im Wesentlichen monomodale Verteilung bezüglich der zweidimensionalen 8 MR- und 10 MR-Kanal-Porenstruktur aus. Die Porenöffnungen sowohl der 8 MR-Kanäle als auch der 10 MR-Kanäle weisen diesbezüglich jeweils eine Fläche bevorzugt im Bereich von (5,70 - 6,00) x (4,00 - 4,20) Å², besonders bevorzugt von (5,80 - 5,90) x (4,05 - 4,15) Å² auf.

Die erfindungsgemäßen Gerüstsilikate weisen bevorzugt Mikroporen mit einer spezifischen Oberfläche im Bereich von größer 200 m²/g, weiter bevorzugt von größer 200 bis 800 m²/g, weiter bevorzugt von 300 bis 700 m²/g und besonders bevorzugt von 400 bis 600 m²/g auf, jeweils bestimmt gemäß DIN 66135 (Langmuir).

Die erfindungsgemäßen Gerüstsilikate weisen bevorzugt Poren mit einem Porenvolumen im Bereich von 0,15 bis 0,21 ml/g, weiter bevorzugt von 0,16 bis 0,20 ml/g und besonders bevorzugt von 0,17 bis 0,19 ml/g auf, jeweils bestimmt gemäß DIN 66134.

Demgemäß stellen die erfindungsgemäßen Gerüstsilikate Silikate eines mikroporösen zeolithischen Typs dar.

Die thermische Stabilität der erfindungsgemäßen Gerüstsilikate liegt bevorzugt bei mindestens 600 °C, weiter vorzugsweise bei mehr als 600 °C.

Der Begriff "thermische Stabilität", wie er in diesem Zusammenhang im Rahmen der vorliegenden Erfindung verwendet wird, bezeichnet diejenige Temperatur, bei der unter Normaldruck die spezifische Gitterstruktur des Gerüstsilikates erhalten bleibt.

### Formkörper

In vielen technischen Anwendungen ist es von Anwenderseite her oft erwünscht, nicht das kristalline Material wie beispielsweise das Schichtsilikat oder das Gerüstsilikat an sich einzusetzen, sondern das kristalline Material, das zu Formkörpern verarbeitet wurde. Solche Formkörper sind gerade in vielen großindustriellen Verfahren nötig, um beispielsweise Abtrennungen von Stoffen aus Stoffgemischen in beispielsweise Rohrreaktoren sinnvoll betrieben zu können.

Demgemäß betrifft die vorliegende Erfindung auch einen Formkörper, enthaltend das oben beschriebene kristalline Gerüstsilikat. Von der vorliegenden Erfindung mit umfasst sind auch Formkörper, umfassend das oben beschriebene Schichtsilikat.

Generell kann der Formkörper neben dem erfindungsgemäßen Gerüstsilikat sämtliche denkbaren weiteren Verbindungen umfassen, solange gewährleistet ist, dass der resultierende Formkörper für die erwünschte Anwendung geeignet ist.

Gemäß einer Ausführungsform wird der erfindungsgemäße Formkörper ohne Verwendung eines Bindemittels durch eines der unten beschriebenen Verformungsverfahren hergestellt. Der Begriff "Bindemittel", wie er in diesem Zusammenhang im Rahmen der vorliegenden Erfindung verwendet wird, bezeichnet ein Bindemittel, das nach dem unten beschriebenen Calcinieren des Formkörpers entweder in seiner ursprünglichen Form oder in umgewandelter Form im Formkörper verbleibt.

Im Rahmen der vorliegenden Erfindung ist es bevorzugt, dass bei der Herstellung des Formkörpers mindestens ein geeignetes Bindemittel verwendet wird. Im Rahmen dieser bevorzugten Ausführungsform wird weiter bevorzugt ein Gemisch aus Gerüstsilikat und dem mindestens einen Bindemittel hergestellt.

Demgemäß beschreibt die vorliegende Erfindung auch ein Verfahren zur Herstellung eines Formkörpers, enthaltend ein wie oben beschriebenes Gerüstsilikat, umfassend die Herstellung eines Gerüstsilikates gemäß dem oben beschriebenen Verfahren und den Schritt
(I) Herstellen eines Gemischs, enthaltend das wie oben beschriebene Gerüstsilikat oder ein Gerüstsilikat, erhältlich gemäß eines wie oben beschriebenen Verfahrens, und mindestens ein Bindemittel.

Als Bindemittel sind generell sämtliche Verbindungen geeignet, die eine über die ohne Bindemittel gegebenenfalls vorhandene Physisorption hinausreichende Adhäsion und/oder Kohäsion zwischen den zu bindenden Teilchen des Gerüstsilikats vermitteln. Beispiele für solche Bindemittel sind etwa Metalloxide wie beispielsweise SiO₂, Al₂O₃, TiO₂, ZrO₂ oder MgO oder Tone oder Gemische aus zwei oder mehr dieser Verbindungen.

Als Al₂O₃-Bindemittel sind insbesondere Tonmineralien und natürlich vorkommende oder künstlich hergestellte Aluminiumoxide wie beispielsweise alpha-, beta-, gamma-, delta-, eta-, kappa-, chi- oder theta-Aluminiumoxid sowie deren anorganische oder metallorganische Vorläuferverbindungen wie beispielsweise Gibbsit, Bayerit, Boehmit, Pseudoboehmit oder Trialkoxyaluminate wie beispielsweise Aluminiumtrüsopropylat bevorzugt. Weitere bevorzugte Bindemittel sind amphiphile Verbindungen mit einem polaren und einem nichtpolaren Anteil sowie Graphit. Weitere Bindemittel sind etwa Tone wie etwa Montmorillonite, Kaoline, Metakaoline, Hectorit, Bentonite, Halloysite, Dickite, Nacrite oder Anaxite.

Diese Bindemittel können als solche eingesetzt werden. Ebenso ist es im Rahmen der vorliegenden Erfindung auch möglich, Verbindungen einzusetzen, aus denen in mindestens einem weiteren Schritt bei der Herstellung der Formkörper das Bindemittel gebildet wird. Beispiele für solche Bindemittelvorstufen sind etwa Tetraalkoxysilane, Tetraalkoxytitanate, Tetraalkoxyzirkonate oder ein Gemisch aus zwei oder mehr verschiedenen Tetraalkoxysilanen oder ein Gemisch aus zwei oder mehr verschiedenen Tetraalkoxytitanaten oder ein Gemisch aus zwei oder mehr verschiedenen Tetraalkoxyzirkonaten oder ein Gemisch aus mindestens einem Tetraalkoxysilan und mindestens einem Tetraalkoxytitanat oder aus mindestens einem Tetraalkoxysilan und mindestens einem Tetraalkoxyzirkonat oder aus mindestens einem Tetraalkoxytitanat und mindestens einem Tetraalkoxyzirkonat oder ein Gemisch aus mindestens einem Tetraalkoxysilan und mindestens einem Tetraalkoxytitanat und mindestens einem Tetraalkoxyzirkonat.

Ganz besonders bevorzugt sind im Rahmen der vorliegenden Erfindung Bindemittel, die entweder ganz oder teilweise aus SiO₂ bestehen oder eine Vorstufe zu SiO₂ darstellen, aus der in mindestens einem weiteren Schritt bei der Herstellung der Formkörper SiO₂ gebildet wird. In diesem Zusammenhang können sowohl kolloidales Siliciumdioxid als auch so genanntes "wet process"-Siliciumdioxid als auch so genanntes "dry process"-Siliciumdioxid eingesetzt werden. In diesen Fällen handelt es sich ganz besonders bevorzugt um amorphes Siliciumdioxid, wobei die Größe der Siliciumdioxidpartikel beispielsweise im Bereich von 5 bis 100 nm liegt und die Oberfläche der Siliciumdioxidpartikel im Bereich von 50 bis 500 m²/g liegt.

Kolloidales Siliciumdioxid, bevorzugt als alkalische und/oder ammoniakalische Lösung, weiter bevorzugt als ammoniakalische Lösung, ist unter anderem etwa kommerziell erhältlich als Ludox®, Syton®, Nalco® oder Snowtex®.

"Wet process"-Siliciumdioxid ist unter anderem etwa kommerziell erhältlich als Hi-Sil®, Ultrasil®, Vulcasil®, Santocel®, Valron-Estersil®, Tokusil® oder Nipsil®.

"Dry process"-Siliciumdioxid ist unter anderem etwa kommerziell erhältlich als Aerosil®, Reolosil®, Cab-O-Sil®, Fransil® oder ArcSilica®.

Unter anderem bevorzugt wird im Rahmen der vorliegenden Erfindung eine ammoniakalische Lösung von kolloidalem Siliciumdioxid.

Demgemäß beschreibt die vorliegende Erfindung auch einen Formkörper, wie oben beschrieben, zusätzlich enthaltend SiO₂ als Bindemittel.

Ebenso betrifft die vorliegende Erfindung auch ein Verfahren, wie oben beschrieben, wobei das gemäß (I) eingesetzte Bindemittel ein SiO₂ enthaltendes oder bildendes Bindemittel ist.

Demgemäß beschreibt die vorliegende Erfindung auch ein Verfahren, wie oben beschrieben, wobei das Bindemittel ein kolloidales Siliciumdioxid ist.

Bevorzugt werden die Bindemittel in einer Menge eingesetzt, die zu letztlich resultierenden Formkörpern führt, deren Bindemittelgehalt im Bereich von bis zu 80 Gew.-% liegt, weiter bevorzugt im Bereich von 5 bis 80 Gew.-%, weiter bevorzugt im Bereich von 10 bis 70 Gew.-%, weiter bevorzugt im Bereich von 10 bis 60 Gew.-%, weiter bevorzugt im Bereich von 15 bis 50 Gew.-%, weiter bevorzugt im Bereich von 15 bis 45 Gew.-% und besonders bevorzugt im Bereich von 15 bis 40 Gew.-%, jeweils bezogen auf das Gesamtgewicht des letztlich resultierenden Formkörpers.

Der Begriff "letztlich resultierender Formkörper", wie er im Rahmen der vorliegenden Erfindung verwendet wird, bezeichnet einen Formkörper, wie er aus den wie unten beschriebenen Trocknungs- und Calcinierungsstufen (IV) und/oder (V); bevorzugt (IV) und (V) und insbesondere bevorzugt (V) erhalten wird.

Das Gemisch aus Bindemittel oder Vorstufe zu einem Bindemittel und dem zeolithischen Material kann zur weiteren Verarbeitung und zur Ausbildung einer plastischen Masse mit mindestens einer weiteren Verbindung versetzt werden. Unter anderem bevorzugt sind hier Porenbildner zu nennen.

Als Porenbildner können im erfindungsgemäßen Verfahren sämtliche Verbindungen eingesetzt werden, die bezüglich des fertigen Formkörpers eine bestimmte Porengröße und/oder eine bestimmte Porengrößenverteilung und/oder bestimmte Porenvolumina bereitstellen.

Bevorzugt werden als Porenbildner im erfindungsgemäßen Verfahren Polymere eingesetzt, die in Wasser oder in wässrigen Lösungsmittelgemischen dispergier-, suspendier- oder emulgierbar sind. Bevorzugte Polymere sind hierbei polymere Vinylverbindungen wie beispielsweise Polyalkylenoxide wie Polyethylenoxide, Polystyrol, Polyacrylate, Polymethacrylate, Polyolefine, Polyamide und Polyester, Kohlenhydrate wie etwa Cellulose oder Cellulosederivate, wie beispielsweise Methylcellulose, oder Zucker oder Naturfasern. Weitere geeignete Porenbildner sind etwa Pulp oder Graphit.

Werden bei der Herstellung des Gemischs gemäß (I) Porenbildner eingesetzt, so liegt der Gehalt des Gemischs gemäß (I) an Porenbildner, bevorzugt Polymer bevorzugt im Bereich von 5 bis 90 Gew.-%, bevorzugt im Bereich von 15 bis 75 Gew.-% und besonders bevorzugt im Bereich von 25 bis 55 Gew.-%, jeweils bezogen auf die Menge an erfindungsgemäßem Gerüstsilikat im Gemisch gemäß (I).

Sollte dies für die zu erzielende Porengrößenverteilung erwünscht sein, kann auch ein Gemisch aus zwei oder mehr Porenbildnern eingesetzt werden.

Die Porenbildner werden in einer besonders bevorzugten Ausführungsform des erfindungsgemäßen Verfahrens, wie untenstehend beschrieben, in einem Schritt (V) durch Calcinieren unter Erhalt des porösen Formkörpers entfernt. Gemäß einer bevorzugten Ausführungsform des erfindungsgemäßen Verfahrens werden dabei Formkörper erhalten, die Poren, bestimmt gemäß DIN 66134, im Bereich von mindestens 0,6 ml/g, bevorzugt im Bereich von 0,6 bis 0,8 ml/g und insbesondere bevorzugt im Bereich von mehr als 0,6 ml/g bis 0,8 ml/g aufweisen.

Die spezifische Oberfläche des erfindungsgemäßen Formkörpers, bestimmt gemäß DIN 66131, liegt im Allgemeinen bei mindestens 350 m²/g, bevorzugt bei mindestens 400 m²/g und insbesondere bevorzugt bei mindestens 425 m²/g. Beispielsweise kann die spezifische Oberfläche im Bereich von 350 bis 500 m²/g oder im Bereich von 400 bis 500 m²/g oder 425 bis 500 m²/g liegen.

Demgemäß beschreibt die vorliegende Erfindung auch einen Formkörper, wie oben beschrieben, mit einer spezifischen Oberfläche von mindestens 350 m²/g, enthaltend Poren mit einem Porenvolumen von mindestens 0,6 ml/g.

Bei der Herstellung des Gemisches gemäß (I) wird im Rahmen einer ebenfalls bevorzugten Ausführungsform des erfindungsgemäßen Verfahrens mindestens ein Anteigungsmittel zugegeben.

Als Anteigungsmittel können alle dafür geeigneten Verbindungen verwendet werden. Vorzugsweise sind dies organische, insbesondere hydrophile Polymere wie beispielsweise Cellulose, Cellulosederivate wie beispielsweise Methylcellulose, Stärke wie beispielsweise Kartoffelstärke, Tapetenpflaster, Polyacrylate, Polymethacrylate, Polyvinylalkohol, Polyvinylpyrrolidon, Polyisobuten oder Polytetrahydrofuran.

Insbesondere können demgemäß als Anteigungsmittel Verbindungen eingesetzt werden, die auch als Porenbildner wirken.

Diese Anteigungsmittel werden in einer besonders bevorzugten Ausführungsform des erfindungsgemäßen Verfahrens, wie untenstehend beschrieben, in einem Schritt (V) durch Calcinieren unter Erhalt des porösen Formkörpers entfernt.

Gemäß einer weiteren Ausführungsform der vorliegenden Erfindung wird bei der Herstellung des Gemisches gemäß (I) mindestens ein saurer Zusatzstoff zugesetzt. Ganz besonders bevorzugt sind organische saure Verbindungen, die sich in dem bevorzugten Schritt (V), wie untenstehend beschrieben, durch Calcinieren entfernen lassen. Besonders bevorzugt sind Carbonsäuren wie beispielsweise Ameisensäure, Oxalsäure und/oder Citronensäure. Ebenso ist es möglich, zwei oder mehr dieser saueren Verbindungen einzusetzen.

Die Zugabereihenfolge der Bestandteile des das Gerüstsilikat enthaltenden Gemischs gemäß (I) ist nicht kritisch. Es ist sowohl möglich, zuerst das mindestens eine Bindemittel zuzugeben, anschließend den mindestens einen Porenbildner, die mindestens eine saure Verbindung und zum Schluss das mindestens eine Anteigungsmittel, als auch die Reihenfolge bezüglich des mindestens einen Bindemittels, des mindestens einen Porenbildners, der mindestens einen sauren Verbindung und des mindestens einen Anteigungsmittels zu vertauschen.

Nach der Zugabe des Bindemittels zum Gerüstsilikat-Feststoff, dem gegebenenfalls mindestens eine der oben beschriebenen Verbindungen bereits zugegeben worden war, wird das Gemisch gemäß (I) in der Regel 10 bis 180 Minuten homogenisiert. Besonders bevorzugt werden zur Homogenisierung unter anderem Kneter, Koller oder Extruder eingesetzt. Bevorzugt wird das Gemisch geknetet. Im industriellen Maßstab wird zur Homogenisierung bevorzugt gekollert.

Demgemäß beschreibt die vorliegende Erfindung auch ein Verfahren zur Herstellung eines Formkörpers, enthaltend ein wie oben beschriebenes Gerüstsilikat, umfassend die Herstellung eines Gerüstsilikates gemäß dem oben beschriebenen Verfahren und die Schritte
(I) Herstellen eines Gemischs, enthaltend das wie oben beschriebene Gerüstsilikat oder ein Gerüstsilikat, erhältlich gemäß eines wie oben beschriebenen Verfahrens, und mindestens ein Bindermaterial;
(II) Kneten des Gemischs.

Bei der Homogenisierung wird in der Regel bei Temperaturen im Bereich von ungefähr 10 °C bis zum Siedepunkt des Anteigungsmittels und Normaldruck oder leichtem überatmosphärischem Druck gearbeitet. Danach kann gegebenenfalls mindestens eine der oben beschriebenen Verbindungen zugegeben werden. Das so erhaltene Gemisch wird solange homogenisiert, vorzugsweise geknetet, bis eine verstrangbare plastische Masse entstanden ist.

Das homogenisierte Gemisch wird gemäß einer weiter bevorzugten Ausführungsform der vorliegenden Erfindung verformt.

Im Rahmen der vorliegenden Erfindung sind für die Verfahren im Rahmen der Formgebung solche Verfahren bevorzugt, bei denen die Verformung durch Extrusion in üblichen Extrudern, beispielsweise zu Strängen mit einem Durchmesser von bevorzugt 1 bis 10 mm und besonders bevorzugt 2 bis 5 mm, erfolgt. Derartige Extrusionsvorrichtungen werden beispielsweise in Ullmann's Enzyklopädie der Technischen Chemie, 4. Auflage, Bd. 2, S. 295 ff., 1972 beschrieben. Neben der Verwendung eines Extruders wird ebenfalls vorzugsweise eine Strangpresse zur Verformung verwendet.

Prinzipiell können jedoch zur Formgebung alle bekannten und/oder geeigneten Knet- und Verformungsvorrichtungen bzw. Verfahren eingesetzt werden. Unter anderem sind hierbei zu nennen:
(a) Brikettieren, d.h. mechanisches Verpressen mit oder ohne Zusatz von zusätzlichem Bindermaterial;
(b) Pelletieren, d.h. Kompaktieren durch kreisförmige und/oder rotierende Bewegungen;
(c) Sintern, d.h. das zu verformende Materials wird einer thermischen Behandlung ausgesetzt;
(d) heiß-isostatisches Pressen.

Beispielsweise kann die Formgebung aus der folgenden Gruppe ausgewählt sein, wobei die Kombination von mindestens zwei dieser Methoden explizit eingeschlossen ist: Brikettieren durch Stempelpressen, Walzenpressen, Ringwalzenpressen, Brikettieren ohne Bindemittel; Pelletieren, Schmelzen, Spinning-Techniken, Abscheidung, Schäumen, Sprühtrocknen; Brennen im Schachtofen, Konvektionsofen, Wanderrost, Drehrohrofen, Kollern.

Das Kompaktieren kann bei Umgebungsdruck oder bei gegenüber dem Umgebungsdruck erhöhtem Druck stattfinden, beispielsweise in einem Druckbereich von 1 bar bis zu mehreren hundert bar. Weiterhin kann das Kompaktieren bei Umgebungstemperatur oder bei gegenüber der Umgebungstemperatur erhöhter Temperatur stattfinden, beispielsweise in einem Temperaturbereich von 20 bis 300 °C. Ist Trocknen und/oder Brennen Bestandteil des Formgebungsschritt, so sind Temperaturen bis zu 600 °C denkbar. Schließlich kann das Kompaktieren in der Umgebungs-Atmosphäre stattfinden oder in einer kontrollierten Atmosphäre. Kontrollierte Atmosphären sind beispielsweise Schutzgas-Atmosphären, reduzierende und/oder oxidierende Atmosphären.

Demgemäß beschreibt die vorliegende Erfindung auch ein Verfahren zur Herstellung eines Formkörpers, enthaltend ein wie oben beschriebenes Gerüstsilikat, umfassend die Herstellung eines Gerüstsilikates gemäß dem oben beschriebenen Verfahren und die Schritte
(I) Herstellen eines Gemischs, enthaltend das wie oben beschriebene Gerüstsilikat oder ein Gerüstsilikat, erhältlich gemäß eines wie oben beschriebenen Verfahrens, und mindestens ein Bindermaterial;
(II) Kneten des Gemischs;
(III) Verformen des gekneteten Gemischs unter Erhalt mindestens eines Formkörpers.

Die Form der erfindungsgemäß hergestellten Formkörper kann beliebig gewählt werden. Insbesondere sind unter anderem Kugeln, ovale Formen, Zylinder oder Tabletten möglich. Ebenso sind Hohlstrukturen wie beispielsweise Hohlzylinder oder bienenwabenförmige Strukturen oder auch sternförmige Geometrien zu nennen.

Besonders bevorzugt wird im Rahmen der vorliegenden Erfindung das Verformen durch Extrusion des gemäß (II) erhaltenen gekneteten Gemischs durchgeführt, wobei als Extrudate weiter bevorzugt im Wesentlichen zylinderförmige Stränge mit einem Durchmesser im Bereich von 1 bis 20 mm, bevorzugt im Bereich von 1 bis 10 mm, weiter bevorzugt im Bereich von 2 bis 10 mm und weiter bevorzugt im Bereich von 2 bis 5 mm erhalten werden.

Dem Schritt (III) schließt sich im Rahmen der vorliegenden Erfindung bevorzugt mindestens ein Trocknungsschritt an. Dieser mindestens eine Trocknungsschritt erfolgt dabei bei Temperaturen im Bereich von im Allgemeinen 80 bis 160 °C, bevorzugt von 90 bis 145 °C und besonders bevorzugt von 100 bis 130 °C, wobei die Trocknungsdauer im Allgemeinen bei 6 h oder mehr, beispielsweise im Bereich von 6 bis 24 h, liegt. Es sind jedoch in Abhängigkeit vom Feuchtigkeitsgehalt des zu trocknenden Materials auch kürzere Trockenzeit wie beispielsweise ungefähr 1, 2, 3, 4, oder 5 h möglich.

Vor und/oder nach dem Trocknungsschritt kann das bevorzugt erhaltene Extrudat beispielsweise zerkleinert werden. Dabei wird vorzugsweise ein Granulat oder Splitt mit einem Partikeldurchmesser von 0,1 bis 5 mm, insbesondere 0,5 bis 2 mm erhalten.

Demgemäß betrifft die vorliegende Erfindung auch ein Verfahren zur Herstellung eines Formkörpers, enthaltend ein wie oben beschriebenes Gerüstsilikat, umfassend die Herstellung eines Gerüstsilikates gemäß dem oben beschriebenen Verfahren und die Schritte
(I) Herstellen eines Gemischs, enthaltend das wie oben beschriebene Gerüstsilikat oder ein Gerüstsilikat, erhältlich gemäß eines wie oben beschriebenen Verfahrens, und mindestens ein Bindermaterial;
(II) Kneten des Gemischs;
(III) Verformen des gekneteten Gemischs unter Erhalt mindestens eines Formkörpers;
(IV) Trocknen des mindestens einen Formkörpers.

Dem Schritt (IV) schließt sich im Rahmen der vorliegenden Erfindung bevorzugt mindestens ein Calcinierungsschritt an. Die Calcinierung wird bei Temperaturen im Bereich von im allgemeinen 350 bis 750 °C und bevorzugt von 450 bis 600 °C durchgeführt.

Die Calcinierung kann unter jeder geeigneten Gasatmosphäre erfolgen, wobei Luft und/oder Magerluft bevorzugt sind. Weiter wird die Calcinierung bevorzugt in einem Muffelofen, einem Drehrohrofen und/oder einem Bandcalcinierofen durchgeführt, wobei die Calcinierungsdauer im Allgemeinen bei 1 h oder mehr, beispielsweise im Bereich von 1 bis 24 h oder im Bereich von 3 bis 12 h liegt. Demgemäß ist es im Rahmen des erfindungsgemäßen Verfahrens beispielsweise möglich, den Formkörper einmal, zweimal oder öfter für jeweils mindestens 1 h wie beispielsweise jeweils im Bereich von 3 bis 12 h zu calcinieren, wobei die Temperaturen während eines Calcinierungsschrittes gleich bleiben oder kontinuierlich oder diskontinuierlich geändert werden können. Wird zweimal oder öfter calciniert, können sich die Calcinierungstemperaturen in den einzelnen Schritten unterscheiden oder gleich sein.

Demgemäß beschreibt die vorliegende Erfindung auch ein Verfahren zur Herstellung eines Formkörpers, enthaltend ein wie oben beschriebenes Gerüstsilikat, umfassend die Herstellung eines Gerüstsilikates gemäß dem oben beschriebenen Verfahren und die Schritte
(I) Herstellen eines Gemischs, enthaltend das wie oben beschriebene Gerüstsilikat oder ein Gerüstsilikat, erhältlich gemäß eines wie oben beschriebenen Verfahrens, und mindestens ein Bindermaterial;
(II) Kneten des Gemischs;
(III) Verformen des gekneteten Gemischs unter Erhalt mindestens eines Formkörpers;
(IV) Trocknen des mindestens einen Formkörpers;
(V) Calcinieren des mindestens einen getrockneten Formkörpers.

Nach dem Calcinierungsschritt kann das calcinierte Material beispielsweise zerkleinert werden. Dabei wird vorzugsweise ein Granulat oder Splitt mit einem Partikeldurchmesser von 0,1 bis 5 mm, insbesondere 0,5 bis 2 mm erhalten.

Vor und/oder nach dem Trocknen und/oder vor und/oder nach dem Calcinieren kann der mindestens eine Formkörper gegebenenfalls mit einer konzentrierten oder verdünnten Broenstedt-Säure oder einem Gemisch aus zwei oder mehr Broenstedt-Säuren behandelt werden. Geeignete Säuren sind beispielsweise Salzsäure, Schwefelsäure, Phosphorsäure, Salpetersäure oder Carbonsäuren, Dicarbonsäuren oder Oligo- oder Polycarbonsäuren wie beispielsweise Nitrilotriessigsäure, Sulfosalicylsäure oder Ethylendiaminotetraessigsäure.

Gegebenenfalls schließt sich an diese mindestens eine Behandlung mit mindestens einer Broenstedtsäure mindestens ein Trockenschritt und/oder mindestens ein Calcinierungsschritt an, der jeweils unter den oben beschriebenen Bedingungen durchgeführt wird.

Gemäß einer weiteren Ausführungsform des erfindungsgemäßen Verfahrens können die erfindungsgemäß erhaltenen Formkörper zur besseren Härtung einer Wasserdampfbehandlung unterzogen werden, nach der bevorzugt nochmals mindestens einmal getrocknet und/oder mindestens einmal calciniert wird. Beispielsweise wird nach mindestens einem Trockenschritt und mindestens einem nachfolgenden Calcinierschritt der calcinierte Formkörper der Wasserdampfbehandlung unterzogen und anschließend nochmals mindestens einmal getrocknet und/oder mindestens einmal calciniert.

Die erfindungsgemäß erhaltenen Formkörper können Härten aufweisen, die im Bereich von 1 bis 20 N wie beispielsweise von 2 bis 15 N, bevorzugt im Bereich von 5 bis 15 N und besonders bevorzugt im Bereich von 10 bis 15 N liegen.

Die obenstehend beschriebene Härte versteht sich im Rahmen der vorliegenden Erfindung als bestimmt an einem Apparat der Firma Zwick, Typ BZ2.5/TS1 S mit einer Vorkraft von 0,5 N, einer Vorkraftschubgeschwindigkeit von 10 mm/min und einer nachfolgenden Prüfgeschwindigkeit von 1,6 mm/min bestimmt. Das Gerät besaß einen festsitzenden Drehteller und einen frei beweglichen Stempel mit eingebauter Schneide von 0,3 mm Stärke. Der bewegliche Stempel mit der Schneide war mit einer Kraftmessdose zur Kraftaufnahme verbunden und bewegte sich während der Messung gegen den festsitzenden Drehteller hin, auf der der zu untersuchende Katalysatorformkörper lag. Das Prüfgerät wurde über einen Computer gesteuert, der die Messergebnisse registrierte und auswertete. Die erzielten Werte stellen den Mittelwert aus den Messungen zu jeweils 10 Katalysatorformkörpern dar. Die Katalysatorformkörper wiesen eine zylindrische Geometrie auf, wobei ihre mittlere Länge in etwa dem Zwei- bis Dreifachen des Durchmessers entsprach, und wurden dabei mit der Schneide von 0,3 mm Stärke mit zunehmender Kraft solange belastet, bis der Formkörper durchtrennt war. Die Schneide wurde dabei senkrecht zur Längsachse des Formkörpers auf den Formkörper aufgebracht. Die dazu benötigte Kraft ist die Schneidhärte (Einheit N).

Im Rahmen der vorliegenden Erfindung ist es auch denkbar, dass ein erfindungsgemäßer Formkörper ausgehend von dem erfindungsgemäß erhaltenen Schichtsilikat hergestellt wird. Dieses kann in dem oben im Zusammenhang mit der Verwendung des Gerüstsilikates beschriebenen Schritt (I) entweder an Stelle des Gerüstsilikates oder zusammen mit dem Gerüstsilikat eingesetzt werden.
- Dabei ist es zum einen denkbar, dass das Schichtsilikat vor dem Einsatz in (I) wie oben beschrieben aus der Suspension, die aus der hydrothermalen Synthese resultiert, gemäß (3) abgetrennt wird, wobei sich dann, vor dem Einsatz in (I), Waschen und/oder Trocknen gemäß (4)/(5) anschließen können.
- Zum anderen ist es denkbar, dass vor dem Einsatz in (I) das Schichtsilikat nicht abgetrennt wird, sondern die gemäß (2) erhaltene Suspension, enthaltend das Schichtsilikat, als solche oder in aufkonzentrierter Form eingesetzt wird. Diese Verfahrensführung bietet den Vorteil, dass beispielsweise zum Herstellen der verformbaren Masse kein zusätzliches oder weniger Anteigungsmittel, beispielsweise bevorzugt Wasser, eingesetzt werden muss. Sollte im Rahmen der vorliegenden Erfindung solch eine aufkonzentrierte Suspension eingesetzt werden, könnte der Feststoffgehalt dieser Suspension beispielsweise in einem Bereich von 10 bis 50 Gew.-% liegen. Die Aufkonzentrierung kann beispielsweise durch Eindampfen der gemäß (2) erhaltenen Suspension, durch Cross-Flow-Filtration, beispielsweise unter vermindertem Druck, oder durch Teilen der gemäß (2) erhaltenen Suspension, Abtrennen des Schichtsilikates aus einem Teil mit optionalem Trocknen und/oder Waschen, und Suspendieren des abgetrennten Schichtsilikates im verbliebenen Teil der Suspension erfolgen.

Ein denkbarer Vorteil beider Alternativen ist darin zu sehen, dass durch Trocknen und Calcinieren des unter Verwendung des Schichtsilikates hergestellen Formkörpers bei geeigneten Temperaturen das Gerüstsilikat im Formkörper entstehen kann und somit, im Vergleich mit oben beschriebenem Verfahren, ein energieaufwändiger Calcinierungsschritt, nämlich der Calcinierungsschritt zur Herstellung des Gerüstsilikates vor vor dem Einsatz des Silikates in (I), eingespart wird.

### Verwendung

Die vorliegende Erfindung betrifft darüber hinaus die Verwendung der erfindungsgemäßen Silikate, insbesondere der erfindungsgemäßen Gerüstsilikate und/oder der erfindungsgemäßen Formkörper, als Molekularsieb, Katalysator, Katalysatorträger oder deren Binder, als Adsorptionsmittel, Pigmente, Zusatzstoffe in Waschmitteln, Zusatz zu Baustoffen, zur Thixotropierung in Farbpasten und Lacken, sowie Anwendungen als Gleit- und Schmierstoff, als Flammschutz, Hilfs- und Füllstoff in Papiererzeugnissen, in bakterizid und/oder fungizid und/oder herbizid wirksamen Zusammensetzungen, zum Ionenaustausch, zur Herstellung von Keramiken, in Polymeren, in elektrischen, optischen oder elektrooptischen Bauteilen und Schaltelementen oder Sensoren.

Reaktionen, die durch die erfindungsgemäßen Silikate grundsätzlich katalysiert werden können, sind beispielsweise Hydrierungen, Dehydrierungen, Oxidehydrierungen, Oxidationen, Epoxidationen, Polymerisationsreaktionen, Aminierungen, Hydratisierungen und Dehydratisierungen, nukleophile und elektrophile Substitutionsreaktionen, Additions- und Eliminationsreaktionen, Doppelbindungs- und Skelettisomerisierungen, Dehydrocyclisierungen, Hydroxylierungen von Heteroaromaten, Epoxid-Aldehydumlagerungen, Metathese-Reaktionen, Olefinherstellung aus Methanol, Diels-Alder-Reaktionen, Knüpfung von Kohlenstoff-Kohlenstoff-Bindungen wie beispielsweise der Olefin-Dimerisierung oder Olefin-Trimerisierung sowie Kondensationsreaktionen vom Typ der Aldolkondensation. Abhängig vom umzusetzenden Molekül können die katalytischen Reaktionen in Gas- oder Flüssigphase oder aber auch in überkritischer Phase durchgeführt werden.

Grundsätzlich eignen sich die erfindungsgemäßen Silikate auch als Molekularsieb. Hierbei kann man vorteilhafterweise die hohe innere Oberfläche des erfindungsgemäßen Materials ausnutzen, um auch Moleküle aufgrund ihres Unterschieds in der Molekülgröße voneinander trennen. Je nach Trennaufgabe kann die jeweilige Adsorption in der Gasphase oder der Flüssigphase oder in überkritischer Phase erfolgen. Beispielsweise ist Trennung von Konstitutionsisomeren, beispielsweise die Trennung von n- und iso-Isomeren kleiner Moleküle zu nennen. Unter dem Begriff "kleines Molekül" werden im Rahmen der vorliegenden Erfindung Moleküle mit einem kinetischen Durchmesser im Bereich von 3,5 bis 5,5 Å verstanden. Zur Definition des kinetischen Durchmessers sei auf D.W. Breck, Zeolite Molecular Sieves, 1974, J. Wiley, Seiten 634 - 641 verwiesen. Beispielhaft seien hierfür die Trennung von n- und i-Butan genannt. Weiter ist etwa die Trennung von Konfigurationsisomeren, beispielsweise die Trennung von cis-Buten und trans-Buten zu erwähnen. Schließlich kann in diesem Zusammenhang auch die Trennung von Olefinen in der Flüssigphase genannt werden. Solche Trennungen können unter anderem insbesondere dann erfolgreich durchgeführt werden, wenn als Lösungsmittel Verbindungen eingesetzt werden, deren kinetischer Durchmesser größer als der oder gleich dem Porendurchmesser des Silikates ist. In diesem Zusammenhang ist etwa t-Butanol zu erwähnen. Weitere Lösungsmittel sind Alkane oder Alkangemische, insbesondere Cyclohexan. Für die erwähnten Olefin-Auftrennungen in der Flüssigphase unter Verwendung von Cyclohexan als Lösungsmittel sind beispielsweise die Auftrennung von Pentenen und die Auftrennung von Butenen zu nennen, wobei in flüssiger Phase in Cyclohexan als Lösungsmittel die Auftrennung von Butenen gegenüber der Auftrennung von Pentenen bevorzugt sein sollte. Insbesondere können die Trennung trans-2-Buten / 1-Buten sowie die Trennung trans-2-Buten / Isobuten, ebenso wie die Trennung von trans-2-Penten von 1-Penten genannt werden.

Als weitere mögliche Verwendung der erfindungsgemäß hergestellten Silikate, insbesondere der erfindungsgemäß hergestellten Gerüstsilikate, ist der Einsatz als Additiv zu Katalysatoren, beispielsweise USY-Zeoliten, zu nennen, die bei Crack-Prozessen, insbesondere bei Crack-Prozessen in flüssiger Phase verwendet werden. Unter anderem ist im Zusammenhang mit den Crack-Prozessen beispielsweise die Herstellung von niederen Olefinen wie beispielsweise Propen durch katalytisches Cracken zu erwähnen.

Als weitere mögliche Verwendung der erfindungsgemäß hergestellten Silikate, insbesondere der erfindungsgemäß hergestellten Gerüstsilikate, ist der Einsatz als Washcoat, der auf Monolithe aufgebracht wird und dann, gegebenenfalls weiter beladen mit mindestens einem Edelmetall, als Katalysator eingesetzt wird, wobei hierbei insbesondere bevorzugt beispielsweise Automobilkatalysatoren zu nennen sind, die zur Reduktion von Stickoxiden NOₓ, Kohlenmonoxid und/oder Kohlenwasserstoffen verwendet werden. Weiter sind 3-Wege-Katalysatoren oder Katalysatoren, die zur Verminderung der Abgase von Dieselmotoren eingesetzt werden, zu nennen.

Weiter ist im Rahmen der vorliegenden Erfindung und der erfindungsgemäßen Silikate die Verwendung zur Abtrennung von mindestens einem Alkan und/oder mindestens einem Alken und/oder mindestens einem Alkin aus einem Stoffgemisch, enthaltend mindestens zwei Alkane oder mindestens zwei Alkene oder mindestens zwei Alkine oder mindestens ein Alkan und mindestens ein Alken oder mindestens ein Alkan und mindestens ein Alkin oder mindestens ein Alken und mindestens ein Alkin oder mindestens ein Alkan und mindestens ein Alken und mindestens eine Alkin, insbesondere zur Auftrennung von Konstitutionsisomeren und/oder Konfigurationsisomeren zu nennen, wobei das mindestens eine Alkan und/oder mindestens eine Alken und/oder mindestens eine Alkin bis zu 10 C-Atome wie beispielsweise 1 C-Atom im Falle von Methan oder 2, 3, 4, 5, 6, 7, 8, 9 oder 10 C-Atome aufweist.

Ebenso kann das erfindungsgemäße oder erfindungsgemäß hergestellte Silikat, insbesondere das Gerüstsilikat, oder ein Formkörper, der dieses Silikat enthält, grundsätzlich beispielsweise
- zur Trennung von Olefin oder Polyolefin und Kohlendioxid, beispielsweise zur Reinigung von Polyethylen oder Polypropylen,
- oder als Katalysator zur Aminierung, wie beispielsweise zur Herstellung von Methylamin und/oder Dimethylamin aus Methanol und Ammoniak oder aus Synthesegas und Ammonaik, wobei bevorzugt ein geringer Anteil an Trimethylamin erzeugt wird,
- oder für Polymerisationen wie beispielsweise zur Herstellung von Polytetrahydrofuran aus Tetrahydrofuran,
- oder als Hydroxylierungskatalyator wie beispielsweise zur Herstellung von Phenol aus Benzol,
- oder allgemein zu Umsetzungsreaktionen mit 6-Ring-Aromaten,
- oder zur Umsetzung von Cyclohexanon zu Cycolhexanonoxim,
- oder für Beckmann-Umlagerungen wie beispielsweise zur Umsetzung von Cyclohexanonoxim zu Caprolacatam
- oder zur Aktivierung von C-C-Dreifachbindungen
- oder zur dehydrierenden Zyklenbildung (Aromatisierung)
eingesetzt werden.

Daher betrifft die vorliegende Erfindung die Verwendung eines Gerüstsilikates der Struktur Ga-RRO oder eines Formkörpers, enthaltend Ga-RRO, zur dehydrierenden Zyklenbildung.

Ebenso betrifft die vorliegende Erfindung die Verwendung eines Gerüstsilikates der Struktur Zn-RRO oder eines Formkörpers, enthaltend Zn-RRO, zur Aktivierung von C-C-Dreifachbindungen.

Überraschenderweise wurde gefunden, dass das neue Material, insbesondere das neue Gerüstsilikat der Struktur RUB-41, eine sehr hohe Aufnahmefähigkeit für 6-Ring-Aromaten bzw. -Heteroaromaten, insbesondere für Benzol, hat. Demgemäß ist beabsichtigt, das neue Material auch für die Abtrennung von Benzol aus Benzol enthaltenden Gemischen zu verwenden.

Wird das erfindungsgemäße Gerüstsilikat oder der dieses Gerüstsilikat enthaltende Formkörper als Adsorbens, beispielsweise zur Stofftrennung, verwendet, so kann die Desorption der adsorbierten Verbindung oder der adsorbierten Verbindungen entweder durch eine geeignete Reduktion des Drucks und/oder einen geeigneten Temperaturwechsel wie besonders bevorzugt durch eine geeignete Temperaturerhöhung und/oder durch Inkontaktbringen des Gerüstsilikats oder des dieses Gerüstsilikat enthaltenden Formkörpers mit mindestens einer Verbindung, die stärker adsorbiert als die zu desorbierende Verbindung oder zu desorbierenden Verbindungen, bewerkstelligt werden.

### Regenerierung

In einer weiteren Ausführungsform des erfindungsgemäßen Verfahrens werden das Gerüstsilikat und/oder die Formkörper nach ihrem Einsatz in dem jeweiligen technischen Gebiet durch ein Verfahren regeneriert, bei dem die Regenerierung durch gezieltes Abbrennen der für die abnehmende Performance verantwortlichen Beläge erfolgt. Dabei wird bevorzugt in einer Inertgasatmosphäre gearbeitet, die genau definierte Mengen an Sauerstoff liefernden Substanzen enthält. Ein solches Regenerierungsverfahren ist unter anderem in der WO 98/55228 und der DE 197 23 949 A1, insbesondere in Spalte 2, Zeilen 33 bis 54 der DE 197 23 949 A1, beschrieben, deren diesbezügliche Offenbarung durch Bezugnahme hiermit vollumfänglich in den Gegenstand der vorliegenden Anmeldung einbezogen wird.

Das zu regenerierende Gerüstsilikat und/oder die Formkörper werden entweder in der Vorrichtung, beispielsweise dem Rohrreaktor, oder in einem externen Ofen in einer Atmosphäre, die 0,1 bis ungefähr 20 Volumen-Anteile von Sauerstoff liefernden Substanzen, besonders bevorzugt 0,1 bis 20 Volumenanteile Sauerstoff, enthält, auf eine Temperatur im Bereich von 250 °C bis 600 °C, vorzugsweise von 400 °C bis 550 °C und insbesondere von 450 °C bis 500 °C aufgeheizt. Dabei wird das Aufheizen vorzugsweise mit einer Aufheizrate von 0,1 °C/min bis 20 °C/min, vorzugsweise von 0,3 °C/min bis 15 °C/min und insbesondere von 0,5 °C/min bis 10 °C/min durchgeführt.

Während dieser Aufheizphase wird bis zu einer Temperatur aufgeheizt, bei der sich die meisten organischen Beläge zu zersetzen beginnen, während gleichzeitig die Temperatur über den Sauerstoffgehalt geregelt wird und somit nicht derart ansteigt, dass es zu Schädigungen der Gerüstsilikat- und/oder Formkörperstruktur kommt. Das langsame Erhöhen der Temperatur bzw. das Verweilen bei niedriger Temperatur durch Einstellen des entsprechenden Sauerstoffgehaltes und der entsprechenden Heizleistung ist bei hohen organischen Beladungen ein wesentlicher Schritt zur Verhinderung einer lokalen Überhitzung des Gerüstsilikats und/oder der Formkörper.

Sinkt die Temperatur des Abgasstroms am Reaktorausgang trotz steigender Mengen an Sauerstoff liefernden Substanzen im Gasstrom, so ist das Abbrennen der organischen Beläge beendet. Die Dauer der Behandlung beträgt im Allgemeinen jeweils 1 bis 30, vorzugsweise ungefähr 2 bis ungefähr 20 und insbesondere ungefähr 3 bis ungefähr 10 Stunden.

Das anschließende Abkühlen des so regenerierten Gerüstsilikats und/oder der Formkörper wird bevorzugt so durchgeführt, dass das Abkühlen nicht zu schnell erfolgt, da sonst die mechanische Festigkeit beispielsweise der Formkörper negativ beeinflusst werden kann.

Es kann erforderlich sein, nach der durchgeführten Regeneration durch Calcinieren, wie oben beschrieben, eine Spülung mit Wasser und/oder verdünnten Säuren wie beispielsweise Salzsäure anzuschließen, um die durch Verunreinigung der Edukte gegebenenfalls verbleibende anorganische Beladung (Alkalispuren etc.) zu entfernen. Anschließend kann eine erneute Trocknung und/oder ein erneutes Calcinieren durchgeführt werden.

Gemäß einer weiteren Ausführungsform des erfindungsgemäßen Verfahrens können das für das jeweilige technische Einsatzgebiet zumindest teilweise deaktivierte Gerüstsilikat und/oder die Formkörper vor dem Aufheizen gemäß der Regenerationsprozedur mit einem Lösungsmittel im Umsetzungsreaktor oder in einem externen Reaktor gewaschen werden, um noch anhaftendes Wertprodukt zu entfernen. Dabei wird das Waschen so durchgeführt, dass zwar die jeweils anhaftenden Wertprodukte entfernt werden können, Temperatur und Druck aber nicht so hoch gewählt werden, dass die meist organischen Beläge ebenfalls entfernt werden. Vorzugsweise wird dabei mit einem geeigneten Lösungsmittel lediglich gespült. Somit eignen sich für diesen Waschvorgang alle Lösungsmittel, in denen sich das jeweilige Wertprodukt gut löst. Die benutzte Menge an Lösungsmittel sowie die Dauer des Waschvorgangs sind nicht kritisch. Der Waschvorgang kann mehrmals wiederholt und bei erhöhter Temperatur durchgeführt werden. Bei Verwendung von CO₂ als Lösungsmittel ist überkritischer Druck bevorzugt, ansonsten kann der Waschvorgang unter Normaldruck bzw. erhöhtem oder überkritischem Druck erfolgen. Nach der Beendigung des Waschvorgangs wird im Allgemeinen getrocknet. Obwohl der Trocknungsvorgang im allgemeinen unkritisch ist, sollte die Trocknungstemperatur die Siedetemperatur des zum Waschen verwendeten Lösungsmittels nicht zu stark übersteigen, um ein schlagartiges Verdampfen des Lösungsmittels in den Poren, insbesondere in den Mikroporen zu vermeiden, da auch dies zu Schädigungen der Gitterstruktur führen kann.

Zur Prozessoptimierung können mindestens zwei Vorrichtungen verwendet werden, die jeweils das erfindungsgemäße Gerüstsilikat und/oder die Formkörper enthalten, wobei im Falle der Regeneration mindestens eine Vorrichtung aus dem Betrieb genommen wird und mindestens eine Vorrichtung im Betrieb verbleibt, so dass der Prozess zu keinem Zeitpunkt unterbrochen werden muss.

Die vorliegende Erfindung wird anhand der nachfolgend beschriebenen Beispiele und Abbildungen näher erläutert.

### Beschreibung der Abbildungen

- Abbildung 1: zeigt das Pulverröntgendiffraktogramm des gemäß Beispiel 2 erhaltenen Gerüstsilikates der Struktur Ga-RUB-41. Das Pulverröntgendiffrak- togramm wurde mittels monochromatischer Cu K alpha-1-Strahlung auf- genommen. Die Diffraktionsdaten wurden mit einem positionssensitiven Detektor im Bereich von 5 bis 65 ° (2 Theta) gesammelt. In der Abbil- dung ist auf der Rechtswertachse der Winkel (2 Theta) in ° (Grad) ange- geben, auf der Hochwertachse sind die Intensitäten aufgetragen.
- Abbildung 2: zeigt das ⁷¹Ga-NMR des gemäß Beispiel 2 erhaltenen Gerüstsilikates der Struktur Ga-RUB-41.
- Abbildung 3: zeigt ein FE-SEM-Bild des gemäß Beispiel 2 erhaltenen Gerüstsilikates der Struktur Ga-RUB-41.
- Abbildung 4: zeigt das Pulverröntgendiffraktogramm des gemäß Beispiel 4 erhaltenen Gerüstsilikates der Struktur Zn-RUB-41. Das Pulverröntgendiffrak- togramm wurde mittels monochromatischer Cu K alpha-1-Strahlung auf- genommen. Die Diffraktionsdaten wurden mit einem positionssensitiven Detektor im Bereich von 5 bis 65 ° (2 Theta) gesammelt. In der Abbil- dung ist auf der Rechtswertachse der Winkel (2 Theta) in ° (Grad) ange- geben, auf der Hochwertachse sind die Intensitäten aufgetragen
- Abbildung 5: zeigt ein FE-SEM-Bild des gemäß Beispiel 6 erhaltenen Gerüstsilikates der Struktur Zn-RUB-41.

### Beispiele:

### Beispiel 1: Herstellung von Ga-RUB-39

Aus 1,0 g entionisiertem Wasser, in dem 0,042 g Galliumnitrat gelöst wurden, 11,5 g wässriger Templat-Lösung (16 Gew.-%ige Dimethyldi-n-propylammoniumhydroxid (DMDPAH)-Lösung), 1,48 g Kieselsäure ("fumed silica", Cab-O-Sil M7D) und 0,02 g Si-RUB-39 als Kristallisationshilfsmittel wurde unter Rühren eine kolloidale Lösung hergestellt. Die Mischung wurde in einen mit Teflon ausgekleideten Autoklaven überführt. Innerhalb von 7 Tagen wurde unter Rotation des Autoklaven bei 150 °C hydrothermal kristallisiert. Es wurde ein Ga-RUB-39 erhalten, wobei die Ga-RUB-39-Kristalle abfiltriert, mit destilliertem Wasser gewaschen und für 24 h bei 70 °C getrocknet wurden.

### Beispiel 2: Herstellung von Ga-RUB-41

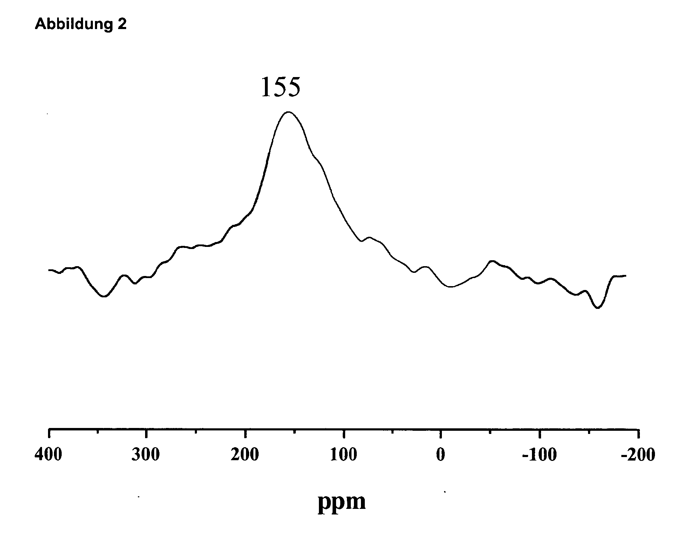

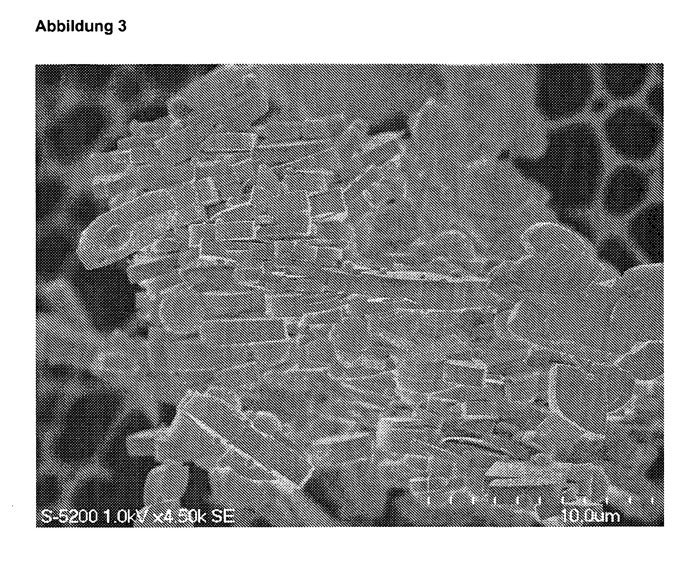

Der gemäß Beispiel 1 erhaltene Ga-RUB-39 wurde für 12 h bei 540 °C calciniert. Die Ausbeute betrug ungefähr 60 %. Die Phasenreinheit des erhaltenen Ga-RUB-41 wurde durch XRD-Analyse des erhaltenen Materials nachgewiesen (siehe Abbildung 1). Aus der Elementaranalyse über ICP bezüglich Si und Ga ergab sich, dass das molare Verhältnis Si:Ga im Produkt in etwa 95:1 betrug. Mittels ⁷¹Ga-NMR-Untersuchung konnte gezeigt werden, dass das Ga im erhaltenen Ga-RUB-41 im Silikatgitter in einer tetraedrischen Gitterumgebung vorlag (siehe Abbildung 2). Die Morphologie des erhaltenen Ga-RUB-41-Materials wurde mittels FE-SEM untersucht (siehe Abbildung 3).

### Beispiel 3: Herstellung von Zn-RUB-39

Aus 1,0 g entionisiertem Wasser, in dem 0,07 g Zinknitrat gelöst wurden, 11,5 g wässriger Templat-Lösung (16 Gew.-%ige Dimethyldi-n-propylammoniumhydroxid (DMDPAH)-Lösung), 1,48 g Kieselsäure ("fumed silica", Cab-O-Sil M7D) und 0,02 g Si-RUB-39 als Kristallisationshilfsmittel wurde unter Rühren eine kolloidale Lösung hergestellt. Die Mischung wurde in einen mit Teflon ausgekleideten Autoklaven überführt. Innerhalb von 8,5 Tagen wurde unter Rotation des Autoklaven bei 150 °C hydrothermal kristallisiert. Es wurde ein Zn-RUB-39 erhalten, wobei die Zn-RUB-39-Kristalle abfiltriert, mit destilliertem Wasser gewaschen und für 24 h bei 70 °C getrocknet wurden.

### Beispiel 4: Herstellung von Zn-RUB-41

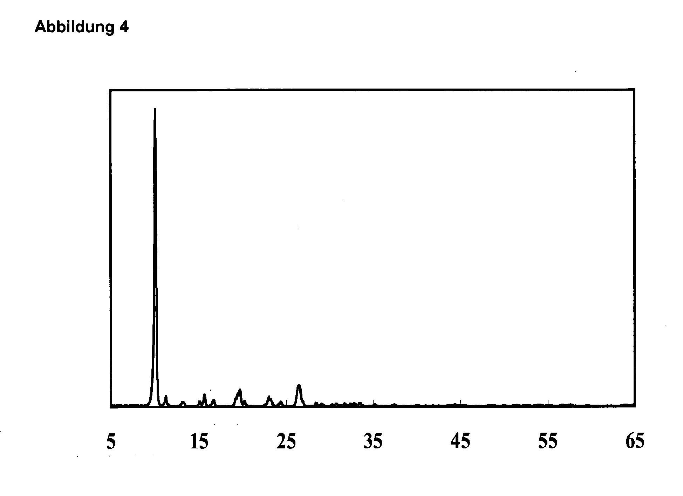

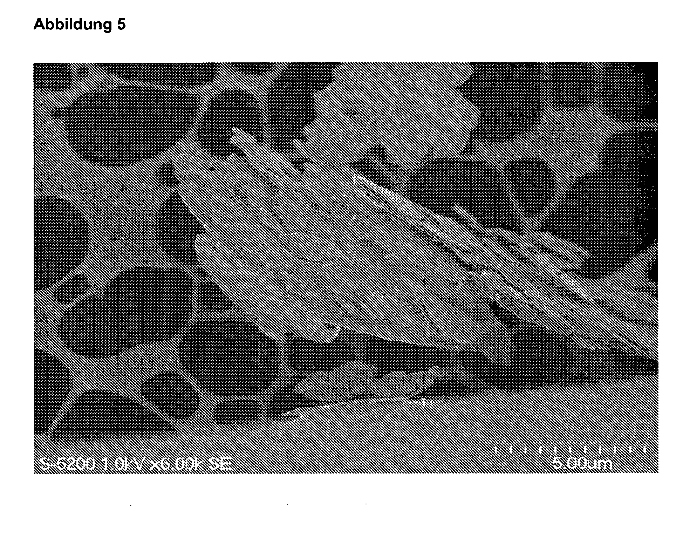

Der gemäß Beispiel 3 erhaltene Zn-RUB-39 wurde für 12 h bei 540 °C calciniert. Die Ausbeute betrug ungefähr 75 %. Die Phasenreinheit des erhaltenen Ga-RUB-41 wurde durch XRD-Analyse des erhaltenen Materials nachgewiesen (siehe Abbildung 4). Aus der Elementaranalyse über ICP bezüglich Si und Zn ergab sich, dass das molare Verhältnis Si:Zn im Produkt in etwa 176:1 betrug. Die Morphologie des erhaltenen Ga-RUB-41-Materials wurde mittels FE-SEM untersucht (siehe Abbildung 5).

## Patentansprüche

1. Verfahren zur Herstellung eines Silikats, enthaltend mindestens Silicium, Sauerstoff und mindestens ein aus der Gruppe bestehend aus Ga und Zn ausgewähltes Heteroatom, umfassend
(1) Herstellen einer kolloidalen wässrigen Lösung aus mindestens einer Siliciumdioxidquelle, mindestens einer R₁R₂R₃R₄N⁺ umfassenden Tetraalkylammoniumverbindung, wobei R₁ und R₂ gleich Methyl und sowohl R₃ als auch R₄ gleich n-Propyl sind, mindestens einer Base, mindestens einem Kristallisationshilfsmittel und mindestens einer Heteroatomquelle, ausgewählt aus der Gruppe bestehend aus einer Ga-Quelle und einer Zn-Quelle;
(2) hydrothermale Kristallisation durch Erwärmen der unter (1) erhaltenen kolloidalen wässrigen Lösung auf eine Temperatur im Bereich von größer der unter dem gewählten Druck vorliegenden Siedetemperatur der kolloidalen wässrigen Lösung bis 180 °C bei Normaldruck unter Erhalt einer Suspension, enthaltend mindestens ein Silikat, enthaltend Silicium, Sauerstoff und mindestens das aus der Gruppe bestehend aus Ga und Zn ausgewählte Heteroatom,
wobei als Kristallisationshilfsmittel in (1) ein Silikat mit der Struktur des gemäß (2) erhaltenen Silikates eingesetzt wird.

2. Verfahren nach Anspruch 1, wobei in (1) das Kristallisationshilfsmittel, bezogen auf Siliciumdioxid und/oder auf im Siliciumdioxid-Precursor enthaltenes Siliciumdioxid, in einer Menge von 0,001 bis 5 Gew.-%, bevorzugt von 0,01 bis 0,05 Gew.-%, zugegeben wird.

3. Verfahren nach Anspruch 1 oder 2, wobei in (1) als Kristallisationshilfsmittel ein Schichtsilikat der Struktur Si-RUB-39 eingesetzt wird.

4. Verfahren nach einem der Ansprüche 1 bis 3, wobei die gemäß (1) eingesetzte wässrige Lösung als Tetraalkylammoniumverbindung Dimethyldi-n-propylammoniumhydroxid (DMDPAH) enthält.

5. Verfahren nach einem der Ansprüche 1 bis 4, **dadurch gekennzeichnet, dass** die gemäß (1) erhaltene kolloidale Lösung, gegebenenfalls nach Aufkonzentrieren, gemäß (2) in einem Autoklaven auf eine Temperatur von 100 bis 180 °C für einen Zeitraum im Bereich von 12 h bis 240 h erwärmt wird.

6. Verfahren nach einem der Ansprüche 1 bis 5, **dadurch gekennzeichnet, dass** gemäß (1) amorphes Siliciumdioxid eingesetzt wird.

7. Verfahren nach einem der Ansprüche 1 bis 6, wobei als Heteroatomquelle Galliumnitrat und/oder Zinknitrat eingesetzt wird.

8. Verfahren nach einem der Ansprüche 1 bis 7, wobei die gemäß (1) erhaltene und gegebenenfalls aufkonzentrierte Lösung vor dem Erwärmen gemäß (2) Silicium, berechnet als SiO₂, Gallium, berechnet als Ga₂O₃, DMDPAH als Tetraalkylammoniumverbindung, Wasser und Kristallisationshilfsmittel
SiO₂ : Ga₂O₃ : DMDPAH : Wasser: Kristallisationshilfsmittel
in den Gewichtsverhältnissen
1 : (0,001 - 0,05) : (0,4 - 10) : (4 12) : (0,001 - 5),
bevorzugt in den Gewichtsverhältnissen
1 : (0,005 - 0,02): (1 - 2) : (10 - 12) : (0,01 - 0,05)
enthält.

9. Verfahren nach einem der Ansprüche 1 bis 7, wobei die gemäß (1) erhaltene und gegebenenfalls aufkonzentrierte Lösung vor dem Erwärmen gemäß (2) Silicium, berechnet als SiO₂, Zink, berechnet als ZnO, DMDPAH als Tetraalkylammoniumverbindung, Wasser und Kristallisationshilfsmittel
SiO₂ : ZnO : DMDPAH : Wasser: Kristallisationshilfsmittel
in den Gewichtsverhältnissen
1 : (0,001 - 0,05) : (0,4 - 10) : (4 - 12) : (0,001 - 5),
bevorzugt in den Gewichtsverhältnissen
1 : (0,01 - 0,05) : (1 - 2) : (10 - 12) : (0,01 - 0,05)
enthält.

10. Verfahren nach einem der Ansprüche 1 bis 9, wobei gemäß (1) als weitere Heteroatomquelle zusätzlich eine Heteroatomquelle, ausgewählt aus der Gruppe bestehend aus einer Aluminium-, einer Bor-, einer Eisen-, einer Titan-, einer Zinn-, einer Germanium-, einer Zirkon-, einer Vanadium-, einer Niob-Quelle und einem Gemisch aus zwei oder mehr dieser Heteroatomquellen, eingesetzt wird.

11. Verfahren nach einem der Ansprüche 1 bis 10, zusätzlich umfassend
(3) Abtrennung des mindestens einen, Silicium, Sauerstoff und mindestens ein Heteroatom enthaltenden Silikats aus der gemäß (2) erhaltenen Suspension,
(4) gegebenenfalls Waschen des gemäß (3) abgetrennten Silikats, bevorzugt Waschen mit Wasser,
(5) Trocknen des gemäß (3) oder (4) erhaltenen Silikats, bevorzugt bei einer Temperatur im Bereich von Raumtemperatur bis 150 °C.

12. Verfahren nach Anspruch 11, zusätzlich umfassend
(6) Calcinieren des gemäß (5) erhaltenen, mindestens einen, Silicium, Sauerstoff und mindestens ein Heteroatom enthaltenden Silikats, bevorzugt bei einer Temperatur im Bereich von 300 bis 600 °C, unter Erhalt eines Gerüstsilikates, bevorzugt eines Gerüstsilikates mit der röntgenografischen Zuordnung zum Typ RRO.

13. Schichtsilikat, erhältlich durch ein Verfahren gemäß einem der Ansprüche 1 bis 11.

14. Gerüstsilikat, erhältlich durch ein Verfahren gemäß Anspruch 12.

15. Schichtsilikat der Struktur RUB-39, im Silikatgitter enthaltend Ga und/oder Zn.

16. Gerüstsilikat der Struktur RRO, im Silikatgitter enthaltend Ga und/oder Zn.

17. Formkörper, enthaltend mindestens ein Gerüstsilikat gemäß Anspruch 16.

18. Verfahren zur Herstellung eines Formkörpers, umfassend die Herstellung eines Gerüstsilikates gemäß einem Verfahren gemäß Anspruch 12 oder die Bereitstellung eines Gerüstsilikates gemäß Anspruch 16, und
(I) Herstellen eines Gemischs, enthaltend das Gerüstsilikat und mindestens ein Bindermaterial;
(II) Kneten des Gemischs;
(III) Verformen des gekneteten Gemischs unter Erhalt mindestens eines Formkörpers;
(IV) Trocknen des mindestens einen Formkörpers;
(V) Calcinieren des mindestens einen getrockneten Formkörpers.

19. Verwendung eines Gerüstsilikates der Struktur Ga-RRO gemäß Anspruch 14 oder 16 oder eines Formkörpers gemäß Anspruch 17, enthaltend Ga-RRO, als Katalysator zur dehydrierenden Zyklenbildung.

20. Verwendung eines Gerüstsilikates der Struktur Zn-RRO gemäß Anspruch 14 oder 16 oder eines Formkörpers gemäß Anspruch 17, enthaltend Zn-RRO, als Katalysator zur Aktivierung von C-C-Dreifachbindungen.

## Claims

1. A process for preparing a silicate comprising at least silicon, oxygen and at least one heteroatom selected from the group consisting of Ga and Zn, comprising
(1) preparing a colloidal aqueous solution from at least one silicon dioxide source, at least one tetraalkylammonium compound comprising R₁R₂R₃R₄N⁺ where R₁ and R₂ are each methyl and both R₃ and R₄ are n-propyl, at least one base, at least one crystallization assistant and at least one heteroatom source selected from the group consisting of a Ga source and a Zn source;
(2) hydrothermally crystallizing by heating the colloidal aqueous solution obtained in (1) to a temperature in the range from greater than the boiling temperature of the colloidal aqueous solution under the selected pressure to 180°C at standard pressure to obtain a suspension comprising at least one silicate comprising silicon, oxygen and at least the heteroatom selected from the group consisting of Ga and Zn,
wherein the crystallization assistant used in (1) is a silicate with the structure of the silicate obtained in (2).

2. The process according to claim 1, wherein the crystallization assistant is added in (1), based on silicon dioxide and/or on silicon dioxide present in the silicon dioxide precursor, in an amount of 0.001 to 5% by weight, preferably of 0.01 to 0.05% by weight.

3. The process according to claim 1 or 2, wherein the crystallization assistant used in (1) is a sheet silicate of the Si-RUB-39 structure.

4. The process according to any of claims 1 to 3, wherein the aqueous solution used in (1) comprises dimethyldi-n-propylammonium hydroxide (DMDPAH) as the tetraalkylammonium compound.

5. The process according to any of claims 1 to 4, wherein the colloidal solution obtained in (1), optionally after concentration, is heated in (2) in an autoclave to a temperature of 100 to 180°C for a period in the range from 12 h to 240 h.

6. The process according to any of claims 1 to 5, wherein amorphous silicon dioxide is used in (1).

7. The process according to any of claims 1 to 6, wherein the heteroatom source used is gallium nitrate and/or zinc nitrate.

8. The process according to any of claims 1 to 7, wherein the optionally concentrated solution obtained in (1), before being heated in (2), comprises silicon, calculated as SiO₂, gallium, calculated as Ga₂O₃, DMDPAH as the tetraalkylammonium compound, water and crystallization assistant
SiO₂:Ga₂O₃:DMDPAH:water:crystallization assistant in the weight ratios
1 : (0.001-0.05) :(0.4-10) : (4-12) : (0.001-5), preferably in the weight ratios
1:(0.005-0.02):(1-2):(10-12):(0.01-0.05).

9. The process according to any of claims 1 to 7, wherein the optionally concentrated solution obtained in (1), before being heated in (2), comprises silicon, calculated as SiO₂, zinc, calculated as ZnO, DMDPAH as the tetraalkylammonium compound, water and crystallization assistant
SiO₂:ZnO:DMDPAH:water:crystallization assistant in the weight ratios
1 : (0.001-0.05) : (0.4-10) : (4-12) : (0.001-5), preferably in the weight ratios
1 : (0.01-0.05) : (1-2) : (10-12):(0.01-0.05).

10. The process according to any of claims 1 to 9, wherein the further heteroatom source used additionally in (1) is a heteroatom source selected from the group consisting of an aluminum source, a boron source, an iron source, a titanium source, a tin source, a germanium source, a zirconium source, a vanadium source, a niobium source and a mixture of two or more of these heteroatom sources.

11. The process according to any of claims 1 to 10, additionally comprising
(3) removing the at least one silicate comprising silicon, oxygen and at least one heteroatom from the suspension obtained in (2),
(4) optionally washing the silicate removed in (3), preferably washing with water,
(5) drying the silicate obtained in (3) or (4), preferably at a temperature in the range from room temperature to 150°C.

12. The process according to claim 11, additionally comprising
(6) calcining the at least one silicate which comprises silicon, oxygen and at least one heteroatom and is obtained in (5), preferably at a temperature in the range from 300 to 600°C, to obtain a framework silicate, preferably a framework silicate assigned by x-ray crystallography to the RRO type.

13. A sheet silicate obtainable by a process according to any of claims 1 to 11.

14. A framework silicate obtainable by a process according to claim 12.

15. A sheet silicate of the RUB-39 structure, comprising Ga and/or Zn in the silicate lattice.

16. A framework silicate of the RRO structure, comprising Ga and/or Zn in the silicate lattice.

17. A shaped body comprising at least one framework silicate according to claim 16.

18. A process for producing a shaped body, comprising the preparation of a framework silicate by a process according to claim 12 or the provision of a framework silicate according to claim 16, and
(I) preparing a mixture comprising the framework silicate and at least one binder material;
(II) kneading the mixture;
(III) shaping the kneaded mixture to obtain at least one shaped body;
(IV) drying the at least one shaped body;
(V) calcining the at least one dried shaped body.

19. The use of a framework silicate of the Ga-RRO structure according to claim 14 or 16 or of a shaped body according to claim 17, comprising Ga-RRO, as a catalyst for dehydrogenating cycle formation.

20. The use of a framework silicate of the Zn-RRO structure according to claim 14 or 16 or of a shaped body according to claim 17, comprising Zn-RRO, as a catalyst for activating C-C triple bonds.

## Revendications

1. Procédé pour la préparation d'un silicate, contenant au moins du silicium, de l'oxygène et au moins un hétéroatome choisi dans le groupe consistant en Ga et Zn, comprenant
(1) la préparation d'une solution aqueuse colloïdale d'au moins une source de dioxyde de silicium, d'au moins un composé de type tétraalkylammonium comprenant R₁R₂R₃R₄N⁺, R₁ et R₂ représentant le groupe méthyle et aussi bien R₃ que R₄ représentant le groupe n-propyle, d'au moins une base, d'au moins un adjuvant de cristallisation et d'au moins une source d'hétéroatome, choisie dans le groupe consistant en une source de Ga et une source de Zn;
(2) la cristallisation hydrothermale par chauffage de la solution aqueuse colloïdale obtenue en (1), à une température dans la plage allant d'une température supérieure à la température d'ébullition, présente sous la pression choisie, à 180°C, sous la pression normale, avec obtention d'une suspension contenant au moins un silicate contenant du silicium, de l'oxygène et au moins l'hétéroatome choisi dans le groupe consistant en Ga et Zn,
dans lequel on utilise comme adjuvant de cristallisation en (1) un silicate ayant la structure du silicate obtenu selon (2).

2. Procédé selon la revendication 1, dans lequel en (1) on ajougte l'adjuvant de cristallisation en une quantié de 0,001 à 5% en poids, de préférence de 0,01 à 0,05 % en poids, par rapport au dioxyde de silicium et/ou au dioxyde de silicium contenu dans le précurseur de dioxyde de silicium.

3. Procédé selon la revendication 1 ou 2, dans lequel en (1) on utilise comme adjuvant de cristallisation un silicate lamellaire de structure Si-RUB-39.

4. Procédé selon l'une quelconque des revendications 1 à 3, dans lequel la solution aqueuse utilisée selon (1) contient en tant que composé de type tétraalkylommonium de l'hydroxyde de diméthyldi-n-propylammonium (DMDPAH).

5. Procédé selon l'une quelconque des revendications 1 à 4, **caractérisé en ce que** la solution colloïdale obtenue selon (1), éventuellement après concentration, est chauffée selon (2) dans un autoclave à une température de 100 à 180 °C pendant une durée dans la plage de 12 h à 240 h.

6. Procédé selon l'une quelconque des revendications 1 à 5, **caractérisé en ce que** selon (1) on utilise du dioxyde de silicium amorphe.

7. Procédé selon l'une quelconque des revendications 1 à 6, dans lequel on utilise comme source d'hétéroatomes le nitrate de gallium et/ou le nitrate de zinc.

8. Procédé selon l'une quelconque des revendications 1 à 7, dans lequel la solution obtenue selon (1) et éventuellement concentrée contient, avant le chauffage selon (2), du silicium, calculé en tant que SiO₂, du gallium, calculé en tant que Ga₂O₃, du DMDPAH en tant que composé de type tétraalkylammonium, de l'eau et un adjuvant de cristallisation
SiO₂ : Ga₂O₃ : DMDPAH : eau : adjuvant de cristallisation en les proportions pondérales
1 : (0,001 - 0,05) : (0,4 - 10) : (4 - 12) : (0,001 - 5), de préférence en les proportions pondérales
1 : (0,005 - 0,02) : (1 - 2) : (10 - 12) : (0,01 - 0,05).

9. Procédé selon l'une quelconque des revendications 1 à 7, dans lequel la solution obtenue selon (1) et éventuellement concentrée contient, avant le chauffage selon (2), du silicium, calculé en tant que SiO₂, du zinc, calculé en tant que ZnO, du DMDPAH en tant que composé de type tétraalkylammonium, de l'eau et un adjuvant de cristallisation
SiO₂ : ZnO : DMDPAH : eau : adjuvant de cristallisation en les proportions pondérales
1 : (0,001 - 0,05) : (0,4 - 10) : (4 - 12) : (0,001 - 5), de préférence en les proportions pondérales
1 : (0,01 - 0,05) : (1 - 2) : (10 - 12) : (0,01 - 0,05).

10. Procédé selon l'une quelconque des revendications 1 à 9, dans lequel en (1) on utilise comme autre sourve d'hétéroatome en plus une source d'hétéroatome choisie dans le groupe constitué par une source d'aluminium, une source de bore, une source de fer, une source de titane, une source d'étain, une source de germanium, une source de zirconium, une source de vanadium, une source de niobium et un mélange de deux ou plus de deux de ces sources d'hétéroatomes.

11. Procédé selon l'une quelconque des revendications 1 à 10, en outre comprenant
(3) la séparation dudit au moins un silicate contenant du silicium, de l'oxygène et au moins un hétéroatome, à partir de la suspension obtenue selon (2),
(4) éventuellement le lavage, de préférence le lavage avec de l'eau, du silicate séparé selon (3),
(5) le séchage, de préférence à une température dans la plage allant de la température ambiante à 150 °C, du silicate obtenu selon (3) ou (4).

12. Procédé selon la revendication 11, en outre comprenant
(6) la calcination, de préférence à une température dans la plage allant de 300 à 600 °C, dudit au moins un silicate contenant du silicium, de l'oxygène et au moins un hétéroatome, obtenu selon (5), avec obtention d'un tectosilicate, de préférence d'un tectosilicate présentant l'affectation radiographique au type RRO.

13. Silicate lamellaire, pouvant être obtenu par un procédé selon l'une quelconque des revendications 1 à 11.

14. Testosilicate, pouvant être obtenu par un procédé selon la revendication 12.

15. Silicate lamellaire de structure RUB-39, contenant Ga et/ou Zn dans le réseau du silicate.

16. Testosilicate de structure RRO, contenant Ga et/ou Zn dans le réseau du silicate.

17. Corps moulé, contenant au moins un tectosilicate selon la revendication 16.

18. Procédé pour la production d'un corps moulé, comprenant la préparation d'un tectosilicate conformément à un procédé selon la revendication 12 ou la préparation d'un tectosilicate selon la revendication 16, et
(I) la préparation d'un mélange, contenant le tectosilicate et au moins un matériau liant ;
(II) le malaxage du mélange ;
(III) le moulage du mélange malaxé, avec obtention d'au moins un corps moulé ;
(IV) le séchage dudit au moins un corps moulé ;
(V) la calcination dudit au moins un corps moulé séché.

19. Utilisation d'un tectosilicate de structure Ga-RRO selon la revendication 14 ou 16, ou d'un corps moulé selon la revendication 17, contenant Ga-RRO, en tant que catalyseur pour la formation de cyclènes avec déshydratation.

20. Utilisation d'un tectosilicate de structure Zn-RRO selon la revendication 14 ou 16 ou d'un corps moulé selon la revendication 17, contenant Zn-RRO, en tant que catalyseur pour l'activation de triples liaisons C-C.
